# EUROPEAN PATENT APPLICATION

(11) **EP 4 598 182 A1**
(43) Date of publication of application: **06.08.2025**
(21) Application number: 23870628.7
(22) Date of filing: 22.09.2023
(51) Int. Cl.: H04W 72/04

(54) **CARRIER SWITCHING METHOD AND APPARATUS, TERMINAL, AND NETWORK DEVICE**

(30) Priority: 30.09.2022 CN 202211217065
(71) Applicant: Datang Mobile Communications Equipment Co., Ltd., Beijing 100085 (CN)
(72) Inventor: ZHU, Min, Beijing 100085 (CN); WANG, Junwei, Beijing 100085 (CN)
(74) Representative: dompatent von Kreisler Selting Werner - Partnerschaft von Patent- und Rechtsanwälten mbB
(86) International application number: PCT/CN2023/120697
(87) International publication number: WO 2024/067397

(57) **Abstract**

The present disclosure provides a carrier switching method, an apparatus, a terminal and a network device, which relate to the field of communication technology. The method comprises: when the number of frequency bands for uplink switching configured is greater than 2, the terminal determines the first slot for carrier switching according to the subcarrier spacing of uplink carriers on multiple frequency bands; the terminal performs a maximum of N carrier switching in the first slot, where N is a positive integer.

## Description

### CROSS REFERENCE OF RELATED APPLICATION

The present disclosure claims a priority of Chinese patent disclosure No. 202211217065.2 filed on September 30, 2022, which is incorporated herein by reference in its entirety.

### TECHNICAL FIELD

The present disclosure relates to the field of communication technology, and in particular to a carrier switching method, an apparatus, a terminal and a network device.

### BACKGROUND

U Uplink (UL) carrier aggregation (CA) supports switching of uplink channels between two frequency bands. For the uplink switching mechanism between two frequency bands, to avoid frequent switching of uplink transmission paths by the terminal, existing protocols impose certain restrictions on the frequency of uplink path switching: the terminal is not expected to perform more than one uplink path switching within a slot corresponding to the maximum subcarrier spacing between the carrier before the switching interval and the carrier after the switching interval. That is, the terminal is not expected to perform more than one uplink path switching within a slot corresponding to µ~UL~=max(µ~UL1~, µ~UL2~), where µ~UL1~ is the subcarrier spacing of the uplink carrier before switching, and µ~UL2~ is the subcarrier spacing of the uplink carrier after switching.

Considering that UL CA will support uplink path switching among more than two frequency bands, such as switching among three or four frequency bands, the following scenario may exist for uplink switching mechanisms involving three or four frequency bands: before switching, data transmission is performed using uplink carriers on two transmission paths of one frequency band, and after switching, data transmission is performed using uplink carriers on one transmission path each of two frequency bands. For example, before switching, two transmission paths on frequency band 2 are used, and after switching, one transmission path each on frequency bands 1 and 3 are used. In this case, the terminal cannot determine the slot for executing carrier switching based on existing technical solutions, thereby making reliable uplink transmission impossible.

### SUMMARY

The present disclosure provides a carrier switching method, apparatus, terminal, and network device, which solve the problem that the terminal cannot determine the slot for executing carrier switching when the number of frequency bands for uplink switching configured is greater than two, thereby ensuring reliable uplink transmission.

Embodiments of the present disclosure provide a carrier switching method, including:
in a scenario where the number of frequency bands for uplink switching configured is greater than two, a terminal determining a first slot for carrier switching based on subcarrier spacings of uplink carriers on multiple frequency bands;
the terminal performing a maximum of N carrier switches within the first slot, where N is a positive integer.

Optionally, before the terminal determines the first slot for carrier switching based on subcarrier spacings of uplink carriers on multiple frequency bands, the method further includes:
the terminal receiving indication information sent by a network device, where the indication information is used to instruct the terminal to determine the first slot based on subcarrier spacings of uplink carriers on multiple frequency bands.

Optionally, before the terminal receives the indication information sent by the network device, the method further includes:
the terminal sending terminal capability information to the network device, where the terminal capability information indicates the terminal's capability to determine the first slot, and the indication information is determined based on the terminal capability information.

Optionally, the determining the first slot for carrier switching based on subcarrier spacings of uplink carriers on multiple frequency bands includes at least one of the following, or the indication information is used to indicate one of the following, or the terminal capability information is used to indicate at least one of the following:
determining the first slot based on subcarrier spacings of uplink carriers on all configured frequency bands;
determining the first slot based on subcarrier spacings corresponding to at least one first frequency band group, where the first frequency band group includes at least two frequency bands, and the subcarrier spacing corresponding to the first frequency band group is determined based on subcarrier spacings of uplink carriers on each frequency band in the first frequency band group; or
determining the first slot based on subcarrier spacings of uplink carriers on the frequency band before switching and subcarrier spacings of uplink carriers on the frequency band after switching.

Optionally, the determining the first slot based on subcarrier spacings of uplink carriers on all configured frequency bands includes:
determining a maximum subcarrier spacing among subcarrier spacings of uplink carriers on all configured frequency bands;
determining a slot corresponding to the maximum subcarrier spacing as the first slot.

Optionally, the determining the first slot based on subcarrier spacings of uplink carriers on all configured frequency bands includes:
determining multiple second frequency band groups based on all configured frequency bands, where each second frequency band group includes at least two frequency bands;
determining a subcarrier spacing corresponding to each second frequency band group based on subcarrier spacings of uplink carriers on the frequency bands in the second frequency band group;
determining a minimum subcarrier spacing among subcarrier spacings corresponding to all second frequency band groups;
determining a slot corresponding to the minimum subcarrier spacing as the first slot.

Optionally, the determining the first slot based on subcarrier spacings corresponding to at least one first frequency band group includes:
determining a minimum subcarrier spacing among subcarrier spacings corresponding to the at least one first frequency band group;
determining a slot corresponding to the minimum subcarrier spacing as the first slot.

Optionally, the subcarrier spacing corresponding to a target frequency band group is a maximum subcarrier spacing among subcarrier spacings of uplink carriers on all frequency bands in the target frequency band group;
where the target frequency band group is the first frequency band group or the second frequency band group.

Optionally, the determining the first slot based on subcarrier spacings of uplink carriers on the frequency band before switching and subcarrier spacings of uplink carriers on the frequency band after switching includes:
determining a maximum subcarrier spacing between the subcarrier spacing of the uplink carrier on the frequency band before switching and the subcarrier spacing of the uplink carrier on the frequency band after switching;
determining a slot corresponding to the maximum subcarrier spacing as the first slot.

Optionally, a start time of the first slot corresponding to the (K+1)-th carrier switching is before an end time of the first slot corresponding to the K-th carrier switching;
and/or,
A start time of the first slot corresponding to the (K+1)-th carrier switching is after an end time of the first slot corresponding to the K-th carrier switching;
where K is a positive integer.

Optionally, the value of N is predefined by a protocol or configured by the network side, and N is 1.

Embodiments of the present disclosure provide a carrier switching method, including:
in a scenario where the number of frequency bands for uplink switching configured is greater than two, a network device determines a first slot for carrier switching based on subcarrier spacings of uplink carriers on multiple frequency bands;
the network device instructing a terminal to perform a maximum of N carrier switches within the first slot, where N is a positive integer.

Optionally, before the network device instructs the terminal to perform a maximum of N carrier switches within the first slot, the method further includes:
the network device sending indication information to the terminal, where the indication information is used to instruct the terminal to determine the first slot based on subcarrier spacings of uplink carriers on multiple frequency bands.

Optionally, before the network device sends the indication information to the terminal, the method further includes:
the network device receiving terminal capability information sent by the terminal, where the terminal capability information indicates the terminal's capability to determine the first slot;
the sending the indication information to the terminal by the network device includes:
the network device sending the indication information to the terminal based on the terminal capability information.

Optionally, the determining the first slot for carrier switching based on subcarrier spacings of uplink carriers on multiple frequency bands includes at least one of the following, or the indication information is used to indicate one of the following, or the terminal capability information is used to indicate at least one of the following:
determining the first slot based on subcarrier spacings of uplink carriers on all configured frequency bands;
determining the first slot based on subcarrier spacings corresponding to at least one first frequency band group, where the first frequency band group includes at least two frequency bands, and the subcarrier spacing corresponding to the first frequency band group is determined based on subcarrier spacings of uplink carriers on each frequency band in the first frequency band group; or
determining the first slot based on subcarrier spacings of uplink carriers on the frequency band before switching and subcarrier spacings of uplink carriers on the frequency band after switching.

Optionally, the determining the first slot based on subcarrier spacings of uplink carriers on all configured frequency bands includes:
determining a maximum subcarrier spacing among subcarrier spacings of uplink carriers on all configured frequency bands;
determining a slot corresponding to the maximum subcarrier spacing as the first slot.

Optionally, the determining the first slot based on subcarrier spacings of uplink carriers on all configured frequency bands includes:
determining multiple second frequency band groups based on all configured frequency bands, where each second frequency band group includes at least two frequency bands;
determining a subcarrier spacing corresponding to each second frequency band group based on subcarrier spacings of uplink carriers on the frequency bands in the second frequency band group;
determining a minimum subcarrier spacing among subcarrier spacings corresponding to all second frequency band groups;
determining a slot corresponding to the minimum subcarrier spacing as the first slot.

Optionally, the determining the first slot based on subcarrier spacings corresponding to at least one first frequency band group includes:
determining a minimum subcarrier spacing among subcarrier spacings corresponding to the at least one first frequency band group;
determining a slot corresponding to the minimum subcarrier spacing as the first slot.

Optionally, the subcarrier spacing corresponding to a target frequency band group is a maximum subcarrier spacing among subcarrier spacings of uplink carriers on all frequency bands in the target frequency band group;
where the target frequency band group is the first frequency band group or the second frequency band group.

Optionally, the determining the first slot based on subcarrier spacings of uplink carriers on the frequency band before switching and subcarrier spacings of uplink carriers on the frequency band after switching includes:
determining a maximum subcarrier spacing between the subcarrier spacing of the uplink carrier on the frequency band before switching and the subcarrier spacing of the uplink carrier on the frequency band after switching;
determining a slot corresponding to the maximum subcarrier spacing as the first slot.

Optionally, a start time of the first slot corresponding to the (K+1)-th carrier switching is before an end time of the first slot corresponding to the K-th carrier switching;
and/or,
a start time of the first slot corresponding to the (K+1)-th carrier switching is after an end time of the first slot corresponding to the K-th carrier switching;
where K is a positive integer.

Optionally, the value of N is predefined by a protocol or configured by the network side, and N is 1.

Embodiments of the present disclosure provide a carrier switching apparatus, including a memory, a transceiver, and a processor;
where the memory is configured to store a computer program; the transceiver is configured to transmit and receive data under control of the processor; and the processor is configured to read the computer program from the memory to perform:
in a scenario where the number of frequency bands for uplink switching configured is greater than two, determining a first slot for carrier switching based on subcarrier spacings of uplink carriers on multiple frequency bands;
performing a maximum of N carrier switches within the first slot, where N is a positive integer.

Optionally, the processor is configured to read the computer program from the memory and perform the following operation:
receiving indication information sent by a network device, where the indication information is used to instruct the terminal to determine the first slot based on subcarrier spacings of uplink carriers on multiple frequency bands.

Optionally, the processor is configured to read the computer program from the memory and perform the following operation:
sending terminal capability information to the network device, where the terminal capability information indicates the terminal's capability to determine the first slot, and the indication information is determined based on the terminal capability information.

Optionally, the processor is configured to read the computer program from the memory and perform at least one of the following operations:
determining the first slot based on subcarrier spacings of uplink carriers on all configured frequency bands;
determining the first slot based on subcarrier spacings corresponding to at least one first frequency band group, where the first frequency band group includes at least two frequency bands, and the subcarrier spacing corresponding to the first frequency band group is determined based on subcarrier spacings of uplink carriers on each frequency band in the first frequency band group; or
determining the first slot based on subcarrier spacings of uplink carriers on the frequency band before switching and subcarrier spacings of uplink carriers on the frequency band after switching.

Optionally, the processor is configured to read the computer program from the memory to perform:
determining a maximum subcarrier spacing among subcarrier spacings of uplink carriers on all configured frequency bands;
determining a slot corresponding to the maximum subcarrier spacing as the first slot.

Optionally, the processor is configured to read the computer program from the memory to perform:
determining multiple second frequency band groups based on all configured frequency bands, where each second frequency band group includes at least two frequency bands;
determining a subcarrier spacing corresponding to each second frequency band group based on subcarrier spacings of uplink carriers on the frequency bands in the second frequency band group;
determining a minimum subcarrier spacing among subcarrier spacings corresponding to all second frequency band groups;
determining a slot corresponding to the minimum subcarrier spacing as the first slot.

Optionally, the processor is configured to read the computer program from the memory to perform:
determining a minimum subcarrier spacing among subcarrier spacings corresponding to at least one first frequency band group;
determining a slot corresponding to the minimum subcarrier spacing as the first slot.

Optionally, the subcarrier spacing corresponding to a target frequency band group is a maximum subcarrier spacing among subcarrier spacings of uplink carriers on all frequency bands in the target frequency band group;
where the target frequency band group is the first frequency band group or the second frequency band group.

Optionally, the processor is configured to read the computer program from the memory to perform:
determining a maximum subcarrier spacing between the subcarrier spacing of the uplink carrier on the frequency band before switching and the subcarrier spacing of the uplink carrier on the frequency band after switching;
determining a slot corresponding to the maximum subcarrier spacing as the first slot.

Optionally, a start time of the first slot corresponding to the (K+1)-th carrier switching is before an end time of the first slot corresponding to the K-th carrier switching;
and/or,
a start time of the first slot corresponding to the (K+1)-th carrier switching is after an end time of the first slot corresponding to the K-th carrier switching;
where K is a positive integer.

Optionally, the value of N is predefined by a protocol or configured by the network side, and N is 1.

Embodiments of the present disclosure provide a terminal, including:
a determining unit, configured to determine a first slot for carrier switching based on subcarrier spacings of uplink carriers on multiple frequency bands in a scenario where the number of frequency bands for uplink switching configured is greater than two;
a processing unit, configured to perform a maximum of N carrier switches within the first slot, where N is a positive integer.

Embodiments of the present disclosure provide a carrier switching apparatus, including a memory, a transceiver, and a processor;
where the memory is configured to store a computer program; the transceiver is configured to transmit and receive data under control of the processor; and the processor is configured to read the computer program from the memory to perform:
in a scenario where the number of frequency bands for uplink switching configured is greater than two, determining a first slot for carrier switching based on subcarrier spacings of uplink carriers on multiple frequency bands;
instructing a terminal to perform a maximum of N carrier switches within the first slot, where N is a positive integer.

Optionally, the processor is configured to read the computer program from the memory and perform the following operation:
sending indication information to the terminal, where the indication information is used to instruct the terminal to determine the first slot based on subcarrier spacings of uplink carriers on multiple frequency bands.

Optionally, the processor is configured to read the computer program from the memory and perform the following operation:
receiving terminal capability information sent by the terminal, where the terminal capability information indicates the terminal's capability to determine the first slot;
sending the indication information to the terminal based on the terminal capability information.

Optionally, the processor is configured to read the computer program from the memory and perform at least one of the following operations:
determining the first slot based on subcarrier spacings of uplink carriers on all configured frequency bands;
determining the first slot based on subcarrier spacings corresponding to at least one first frequency band group, where the first frequency band group includes at least two frequency bands, and the subcarrier spacing corresponding to the first frequency band group is determined based on subcarrier spacings of uplink carriers on each frequency band in the first frequency band group; or
determining the first slot based on subcarrier spacings of uplink carriers on the frequency band before switching and subcarrier spacings of uplink carriers on the frequency band after switching.

Optionally, the processor is configured to read the computer program from the memory to perform:
determining a maximum subcarrier spacing among subcarrier spacings of uplink carriers on all configured frequency bands;
determining a slot corresponding to the maximum subcarrier spacing as the first slot.

Optionally, the processor is configured to read the computer program from the memory to perform:
determining multiple second frequency band groups based on all configured frequency bands, where each second frequency band group includes at least two frequency bands;
determining a subcarrier spacing corresponding to each second frequency band group based on subcarrier spacings of uplink carriers on the frequency bands in the second frequency band group;
determining a minimum subcarrier spacing among subcarrier spacings corresponding to all second frequency band groups;
determining a slot corresponding to the minimum subcarrier spacing as the first slot.

Optionally, the processor is configured to read the computer program from the memory to perform:
determining a minimum subcarrier spacing among subcarrier spacings corresponding to at least one first frequency band group;
determining a slot corresponding to the minimum subcarrier spacing as the first slot.

Optionally, the subcarrier spacing corresponding to a target frequency band group is a maximum subcarrier spacing among subcarrier spacings of uplink carriers on all frequency bands in the target frequency band group;
where the target frequency band group is the first frequency band group or the second frequency band group.

Optionally, the processor is configured to read the computer program from the memory to perform:
determining a maximum subcarrier spacing between the subcarrier spacing of the uplink carrier on the frequency band before switching and the subcarrier spacing of the uplink carrier on the frequency band after switching;
determining a slot corresponding to the maximum subcarrier spacing as the first slot.

Optionally, a start time of the first slot corresponding to the (K+1)-th carrier switching is before an end time of the first slot corresponding to the K-th carrier switching;
and/or,
astart time of the first slot corresponding to the (K+1)-th carrier switching is after an end time of the first slot corresponding to the K-th carrier switching;
where K is a positive integer.

Optionally, the value of N is predefined by a protocol or configured by the network side, and N is 1.

Embodiments of the present disclosure provide a network device, including:
a determining unit, configured to determine a first slot for carrier switching based on subcarrier spacings of uplink carriers on multiple frequency bands in a scenario where the number of frequency bands for uplink switching configured is greater than two;
a processing unit, configured to instruct a terminal to perform a maximum of N carrier switches within the first slot, where N is a positive integer.

Embodiments of the present disclosure provide a processor-readable storage medium storing a computer program, where the computer program is configured to cause a processor to execute the steps of the terminal-side carrier switching method described above, or the steps of the network device-side carrier switching method described above.

Beneficial Effects of the Technical Solutions of the Present Disclosure

In the above solutions, in a scenario where the number of frequency bands for uplink switching configured is greater than two, the terminal determines the first slot for carrier switching based on subcarrier spacings of uplink carriers on multiple frequency bands, thereby enabling the determination of the slot for carrier switching when the number of frequency bands exceeds two. The terminal performs a maximum of N carrier switches within the first slot. This solution resolves the problem that the terminal cannot determine the slot for executing carrier switching when the number of frequency bands for uplink switching configured is greater than two, thereby improving the reliability of uplink transmission.

### BRIEF DESCRIPTION OF THE DRAWINGS

FIG. 1a illustrates a first scenario of uplink transmission path switching between two frequency bands;
FIG. 1b illustrates a second scenario of uplink transmission path switching between two frequency bands;
FIG. 2 illustrates a scenario of uplink transmission path switching among three frequency bands;
FIG. 3 is a flowchart of a terminal-side carrier switching method according to an embodiment of the present disclosure;
FIG. 4 illustrates switching from carrier 1 to carrier 2 and then from carrier 2 to carrier 3 according to an embodiment of the present disclosure;
FIG. 5 illustrates switching from carrier 1 to carrier 2 and then from carrier 2 to carrier 1 according to an embodiment of the present disclosure;
FIG. 6 illustrates switching from 2TX on carrier 2 to 1TX on carrier 1 and 1TX on carrier 3, and then back to 2TX on carrier 2 according to an embodiment of the present disclosure;
FIG. 7 illustrates switching from carrier 1 to carrier 2 and then from carrier 2 to carrier 3 according to another embodiment of the present disclosure;
FIG. 8 illustrates switching from carrier 1 to carrier 2 and then from carrier 2 to carrier 1 according to another embodiment of the present disclosure;
FIG. 9 illustrates switching from 2TX on carrier 2 to 1TX on carrier 1 and 1TX on carrier 3, and then back to 2TX on carrier 2 according to another embodiment of the present disclosure;
FIG. 10 illustrates overlapping effective times of first slots between different carriers according to an embodiment of the present disclosure;
FIG. 11 illustrates non-overlapping effective times of first slots between different carriers according to an embodiment of the present disclosure;
FIG. 12 is a flowchart of a network device-side carrier switching method according to an embodiment of the present disclosure;
FIG. 13 is a block diagram of a terminal-side carrier switching apparatus according to an embodiment of the present disclosure;
FIG. 14 is a block diagram of a terminal according to an embodiment of the present disclosure;
FIG. 15 is a block diagram of a network device-side carrier switching apparatus according to an embodiment of the present disclosure; and
FIG. 16 is a block diagram of a network device according to an embodiment of the present disclosure.

### DETAILED DESCRIPTION

To make the technical problems, solutions, and advantages of the present disclosure clearer, the following describes the embodiments in detail with reference to the accompanying drawings. In the following description, specific details such as configurations and components are provided solely to assist in a comprehensive understanding of the embodiments of the present disclosure. Therefore, it should be apparent to those skilled in the art that various changes and modifications can be made to the embodiments described herein without departing from the scope and spirit of the present disclosure. Additionally, descriptions of well-known functions and constructions are omitted for clarity and conciseness.

It should be understood that references to "one embodiment" or "an embodiment" throughout the specification mean that a specific feature, structure, or characteristic described in connection with the embodiment is included in at least one embodiment of the present disclosure. Therefore, the phrases "in one embodiment" or "in an embodiment" appearing throughout the specification do not necessarily refer to the same embodiment. Furthermore, the specific features, structures, or characteristics may be combined in any suitable manner in one or more embodiments.

In the various embodiments of the present disclosure, it should be understood that the sequence numbers of processes do not imply execution order, and the execution order of processes should be determined by their functionality and internal logic, without imposing any limitation on the implementation of the embodiments.

Additionally, the terms "system" and "network" are often used interchangeably herein.

The technical solutions provided by the embodiments of the present disclosure are applicable to various systems, particularly fifth-generation (5G) systems. For example, applicable systems may include a Global System for Mobile Communications (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), LTE-Advanced (LTE-A), Universal Mobile Telecommunications System (UMTS), Worldwide Interoperability for Microwave Access (WiMAX), 5G New Radio (NR) system, etc. These systems include terminal devices and network devices. The systems may also include core network components, such as an Evolved Packet System (EPS), 5G System (5GS), etc.

The network device and the terminal device may perform Multi-Input Multi-Output (MIMO) transmission using one or more antennas. MIMO transmission may be Single User MIMO (SU-MIMO) or Multi-User MIMO (MU-MIMO). Depending on the form and number of antenna combinations, MIMO transmission may be two-dimensional MIMO (2D-MIMO), three-dimensional MIMO (3D-MIMO), Full Dimension MIMO (FD-MIMO), or massive MIMO. It may also involve diversity transmission, precoding transmission, or beamforming transmission.

The term "and/or" in the embodiments of the present disclosure describes the association relationship between associated objects, indicating that three relationships may exist. For example, "A and/or B" may indicate: A alone, both A and B, or B alone. The character "/" generally indicates an "or" relationship between the associated objects.

The term "multiple" in the embodiments of the present disclosure refers to two or more, and other quantifiers are interpreted similarly.

The following describes the technical solutions of the present disclosure in detail with reference to the accompanying drawings. Obviously, the described embodiments are only a part of the embodiments of the present disclosure, not all of them. Based on the embodiments of the present disclosure, all other embodiments obtained by those of ordinary skill in the art without creative efforts shall fall within the protection scope of the present disclosure.

The following introduces the uplink path switching mechanism:

### Uplink Path Switching Mechanism

Supports selective transmission/concurrent processes on carriers of multiple frequency bands (bands), primarily aiming to enhance the wireless coverage capability of cells. For example:

When a terminal is at the center of a cell (close to the base station), it uses a carrier on a higher-frequency band (e.g., 3.5 GHz 2TX MIMO carrier-1 with 100 MHz bandwidth) to achieve higher data transmission rates.

When a terminal is at the edge of a cell (far from the base station), it uses a carrier on a lower-frequency band (e.g., 2.1 GHz carrier-2 with 20 MHz bandwidth) to ensure coverage quality.

When a terminal is in an intermediate position, it may use carriers on two bands simultaneously (e.g., 2.1 GHz carrier-1 and 3.5 GHz carrier-2) to fully utilize spectrum resources and enhance user experience (e.g., "concurrent uplink" mode).

### Uplink Path Switching Mechanism Between Two Frequency Bands

Supports switching between a 1-transmit (1Tx) band and a 2-transmit (2Tx) band, with two switching options: Option 1 allows uplink transmission on one of two bands, while Option 2 supports concurrent uplink transmission on both bands. Specific switching scenarios are shown in Table 1:

**Table 1: Uplink channel switching mechanism between 1Tx band and 2Tx band**

| Switching mode | Number of transmission channels (Band 1 + Band 2 ) | |
|---|---|---|
| Option 1 | Case 1 | 1T+0T |
| | Case 2 | 0T+2T |
| Option 2 | Case 1 | 1T+1T |
| | Case 2 | 0T+2T |

Here, "1T+0T" means that carrier 1 is on the 1Tx band; " 0T+2T" means that carrier 2 is on the 2Tx band; " 1T+1T " means that carrier 1 and carrier 2 are on the 1Tx band respectively. Among them, carrier 1 is the uplink carrier on frequency band 1, and carrier 2 is the uplink carrier on frequency band 2.

Furthermore, the two-band uplink channel switching supports switching between two 2Tx bands, and supports two switching modes, option 1 and option 2. Specifically, the uplink channel switching between the two frequency bands is shown in the following Table 2:

**Table 2: Uplink channel switching mechanism between 2Tx band-2Tx band**

| Switching mode | Number of transmission channels (Band 1 + Band 2 ) | |
|---|---|---|
| Option 1 | Case 2 | 0T+2T |
| | Case 3 | 2T+0T |
| Option 2 | Case 1 | 1T+1T |
| | Case 2 | 0T+2T |
| | Case 3 | 2 T+0T |

Here, "1T+0T" means that carrier 1 is on the 1Tx band; " 0T+2T" means that carrier 2 is on the 2Tx band; " 1T+1T " means that carrier 1 and carrier 2 are on the 1Tx band respectively, and " 2 T+0T" means that carrier 1 is on the 2Tx band. Among them, carrier 1 is the uplink carrier on frequency band 1, and carrier 2 is the uplink carrier on frequency band 2.

### 3. Uplink channel switching mechanism between three or four bands

In order to enable the base station to perform more flexible scheduling between different frequency bands and improve the uplink transmission throughput, it is further proposed to support the uplink channel switching mechanism between three or four frequency bands without improving the terminal 2Tx transmission capability.
(1) The uplink channel switching technology between the three frequency bands is shown in Table 3 below:

**Table 3: Uplink channel switching mechanism between three frequency bands**

| Switching mode | Number of transmission channels (Band 1 + Band 2 + Band 3) | |
|---|---|---|
| Option 1 | Case 4 | 0T+ 0T+ 2T |
| | Case 5 | 0T+2T+0T |
| | Case 6 | 2T+0T +0T |
| Option 2 | Case 1 | 0T+1T+1T |
| | Case 2 | 1T+0T+1T |
| | Case 3 | 1T+1T+0T |
| | Case 4 | 0T+0T+2T |
| | Case 5 | 0T+2T+0T |
| | Case 6 | 2T+0T+0T |

(2) The uplink channel switching mechanism between the four frequency bands is shown in Table 4 below:

**Table 4: Uplink channel switching mechanism between four frequency bands**

| Switching mode | Number of transmission channels (Band 1 + Band 2 + Band 3 + Band 4) | |
|---|---|---|
| Option 1 | Case 7 | 0T+0T+0T+2T |
| | Case 8 | 0T+0T+2T+0T |
| | Case 9 | 0T+2T+0T+0T |
| | Case 10 | 2T+0T+0T+0T |
| | Case 1 | 0T+0T+1T+1T |
| | Case 2 | 0T+1T+0T+1T |
| | Case 3 | 0T+1T+1T+0T |
| | Case 4 | 1T+1T+0T+0T |
| Option 2 | Case 5 | 1T+0T+1T+0T |
| | Case 6 | 1T+0T+0T+1T |
| | Case 7 | 0T+0T+0T+2T |
| | Case 8 | 0T+0T+2T+0T |
| | Case 9 | 0T+2T+0T+0T |
| | Case 10 | 2T+0T+0T+0T |

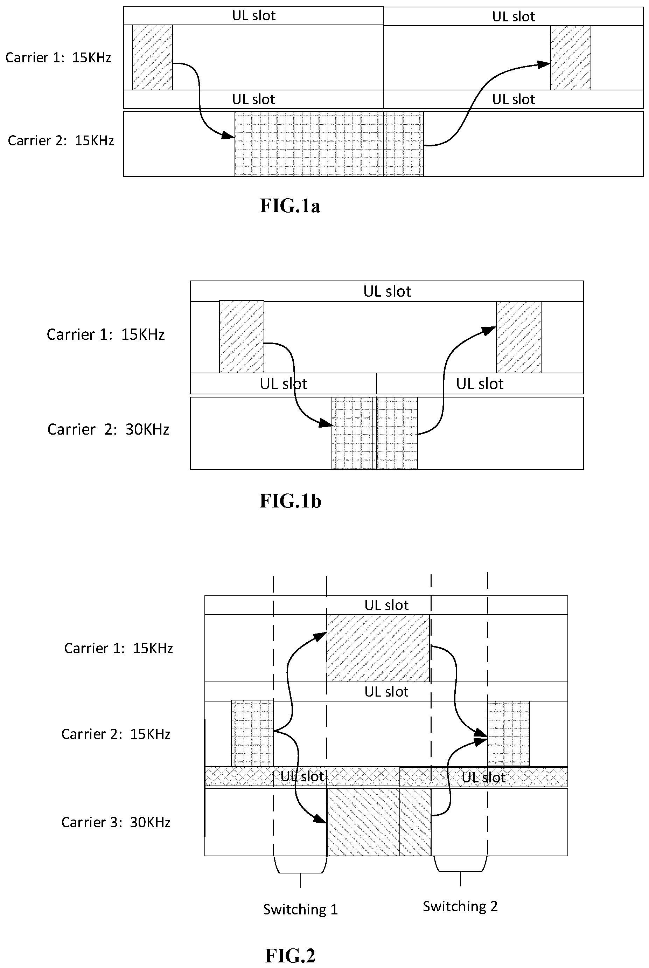

In order to avoid the terminal from frequently switching the uplink transmission channel, thereby reducing the complexity of the terminal implementation, it is stipulated that the terminal supports uplink transmission channel switching at most once in the slot of the maximum subcarrier spacing corresponding to the carrier before the switching interval and the carrier after the switching interval. As shown in Figure 1a, the base station schedules the terminal to switch from carrier 1 to carrier 2, and the subcarrier spacing of carrier 1 on frequency band 1 is 15kHz, and the subcarrier spacing of carrier 2 on frequency band 2 is 15kHz. In this case, the subcarrier spacing of the carrier before the switch is 15kHz, the subcarrier spacing of the carrier after the switch is 15kHz, the maximum subcarrier spacing of the carrier before and after the switch is 15kHz, and the terminal switches at most once in the slot of 15kHz. As shown in Figure 1b, the base station schedules the terminal to switch from carrier 1 to carrier 2, the subcarrier spacing of carrier 1 on frequency band 1 before the switch is 15kHz, the subcarrier spacing of carrier 2 on frequency band 2 after the switch is 30kHz, the maximum subcarrier spacing before and after the switch is 30kHz, and the terminal switches at most once in the slot of 30kHz.

Consider that uplink transmission will support uplink transmission path switching between three or four frequency bands, and the uplink transmission path switching cases increase in the three or four frequency band switching. For example: taking three frequency bands as an example, as shown in Table 3 above, the base station schedules the terminal from case 5 to case 2. The frequency band before switching is frequency band 2 (the subcarrier spacing of its carrier is 15kHz), and the frequency band after switching is frequency band 1 (the subcarrier spacing of its carrier is 15kHz) and frequency band 3 (the subcarrier spacing of its carrier is 30kHz), as shown in Figure 2. At this time, the terminal simultaneously performs switching from carrier 2 to carrier 1 and switching from carrier 2 to carrier 3 in one switching. However, the restriction rules on uplink path switching frequency in the existing protocol are only applicable to the scenario where the terminal switches between two frequency bands, and cannot solve the scenario where the terminal switches between three or four frequency bands.

The embodiments of the present disclosure provide a carrier switching method, device, terminal and network device, which solve the problem that the terminal cannot determine the slot for performing carrier switching, and thus cannot perform reliable uplink transmission, for the current uplink channel switching with a frequency band greater than 2. Among them, the method, device and terminal (or network device) are based on the same application concept. Since the principles of solving the problem by the method, device and terminal (or network device) are similar, the implementation of the device and method can refer to each other, and the repeated parts will not be repeated.

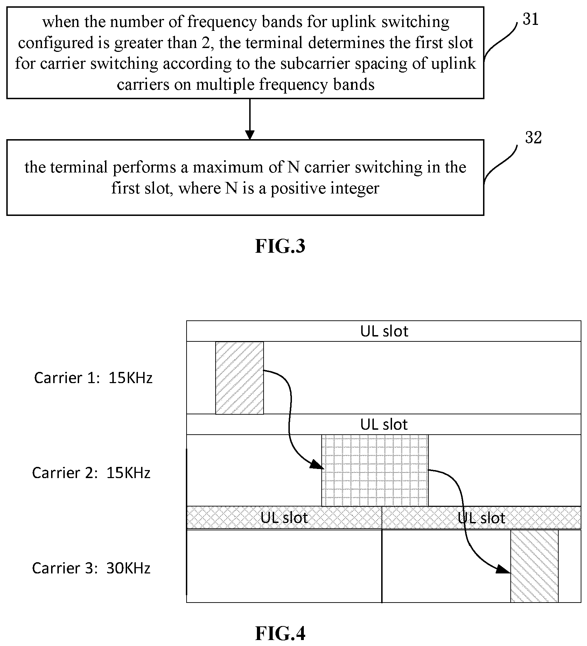

As shown in FIG3, the embodiment of the present disclosure provides a carrier switching method, comprising the following steps:

Step 31: when the number of frequency bands for uplink switching configured is greater than 2, the terminal determines the first slot for carrier switching according to the subcarrier spacing of uplink carriers on multiple frequency bands.

Optionally, the subcarrier spacing of uplink carriers on multiple frequency bands includes but is not limited to at least one of the following: the subcarrier spacing of uplink carriers on all frequency bands predefined by the network device configuration or protocol, the subcarrier spacing of one or more frequency band groups containing M (M is a positive integer greater than 1) frequency bands predefined by the network device configuration or protocol, the subcarrier spacing of uplink carriers on all frequency bands before switching and all frequency bands after switching, etc., but the embodiments of the present disclosure are not limited thereto.

Optionally, in the NR system, the slot length depends on the subcarrier spacing. The wider the subcarrier spacing, the shorter the duration of the slot. For example, in the NR system, the subcarrier spacing includes 15kHz, 30kHz, 60kHz, 120kHz, and 240kHz, and the corresponding slots are 1ms, 0.5ms, 0.25ms, 0.125ms, and 0.0625ms, respectively. In this way, based on the subcarrier spacing of the uplink carrier on multiple frequency bands, the first slot for carrier switching can be determined. Of course, the embodiments of the present disclosure are not limited to application in NR systems, and the subcarrier spacing and the method for determining the corresponding slot based on the subcarrier spacing are not limited thereto.

Step 32: the terminal performs a maximum of N carrier switching in the first slot, where N is a positive integer.

Optionally, the value of N is predefined by the protocol or configured by the network side (such as by a high-level configuration). Optionally, N is 1, and of course N can also be other values, etc., and the embodiments of the present disclosure are not limited thereto.

In the above scheme, when the number of frequency bands for uplink switching configured is greater than 2, the terminal determines the first slot for carrier switching according to the subcarrier spacing of the uplink carriers on multiple frequency bands, that is, the slot for carrier switching can be determined for the case where the number of frequency bands is greater than 2, and a maximum of N carrier switching is performed in the first slot. This scheme example can solve the problem that the terminal cannot determine the slot for performing carrier switching for uplink channel switching with a number of frequency bands greater than 2, thereby facilitating the reliability of uplink transmission.

Optionally, determining the first slot for carrier switching according to the subcarrier spacing of uplink carriers on multiple frequency bands includes at least one of the following:
determining the first slot based on subcarrier spacings of uplink carriers on all configured frequency bands;
determining the first slot based on subcarrier spacings corresponding to at least one first frequency band group, wherein the first frequency band group comprises at least two frequency bands, and the subcarrier spacings corresponding to the first frequency band group are determined based on subcarrier spacings of uplink carriers on each frequency band in the first frequency band group; or
determining the first slot based on subcarrier spacings of uplink carriers on a pre-switching frequency band and subcarrier spacings of uplink carriers on a post-switching frequency band.

For example: determining the first slot according to the subcarrier spacing of uplink carriers on all configured frequency bands includes but is not limited to at least one of the following: determining the first slot according to the subcarrier spacing of uplink carriers on each frequency band of all configured frequency bands; determining multiple frequency band groups including M frequency bands according to all configured frequency bands, and determining the first slot according to the subcarrier spacing corresponding to each frequency band group, where M is a positive integer greater than 1.

As an optional embodiment, determining the first slot according to the subcarrier spacing of the uplink carriers on all configured frequency bands, that is, determining the first slot according to the subcarrier spacing of the uplink carriers on each frequency band of all configured frequency bands, includes:
determining a maximum subcarrier spacing among subcarrier spacings of uplink carriers on all configured frequency bands;
determining a slot corresponding to the maximum subcarrier spacing as the first slot.

For example: taking three frequency bands or four frequency bands as an example, the first slot is determined by the maximum subcarrier spacing of the uplink carrier in the configured three frequency bands or four frequency bands. For example, in the switching of three frequency bands or four frequency bands, the base station configures the subcarrier spacing of the uplink carrier on each frequency band for the terminal. For example, for four frequency bands, the subcarrier spacing of the uplink carrier on each frequency band is configured as µ _{UL1}, µ _{UL2}, µ _{UL3}, µ _{UL4.} The first slot is determined by the maximum value of the subcarrier spacing of the uplink carrier on all frequency bands, that is, the first slot is determined by µ _{UL} =max(µ _{UL1}, µ _{UL 2}, µ _{UL 3}, µ _{UL 4}).

### Embodiment 1:

Step 1: In the three-band or four-band switching, the base station configures the subcarrier spacing of the uplink carrier on each frequency band. For the convenience of description, the uplink carrier on frequency band 1 is carrier 1, and the corresponding subcarrier spacing is defined as µ _{UL1}; the uplink carrier on frequency band 2 is carrier 2, and the corresponding carrier spacing is defined as µ _{UL2}; and so on.

Step 2: The first slot is determined by the maximum value of the subcarrier spacing of all carriers, that is, the first slot is determined by µ _{UL} =max(µ _{UL1}, µ _{UL 2}, µ _{UL 3}, µ _{UL4}).

Step 3: In a three-band or four-band handover, the terminal can switch a maximum of N times in the first slot (N is set to 1 according to the protocol or the base station configuration). This limit applies to all handover situations in a three-band or four-band handover.

Example 1: The base station configures the terminal to allow uplink frequency band switching between band 1, band 2 and band 3. The subcarrier spacing of carrier 1 on band 1 is µ _{UL1} = 15 kHz, the subcarrier spacing of carrier 2 on band 2 is µ _{UL 2} = 15 kHz, and the subcarrier spacing of carrier 3 on band 3 is µ _{UL 3} = 30 kHz. In this configuration, the subcarrier spacing µ _{UL of the first slot} is determined by the maximum subcarrier spacing among carrier 1, carrier 2 and carrier 3, that is, µ _{UL} = max(15 kHz, 15kHz,30kHz ) = 30kHz.

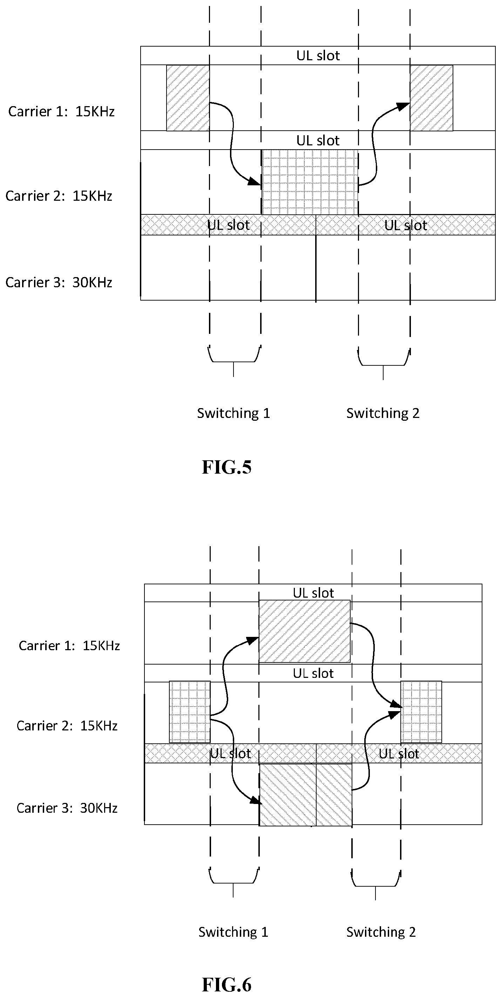

The terminal can switch at most once in the first slot, and the subcarrier spacing of the first slot is 30kHz. This restriction applies to all switching situations in the three-band switching, such as the following three situations:
Case 1: The base station schedules or configures the uplink transmission path of the terminal to perform the first uplink transmission path switching in the first first slot, switching from carrier 1 to carrier 2; and then the second uplink transmission path switching can be performed in the second first slot, switching from carrier 2 to carrier 3, as shown in FIG4;
Case 2: The base station schedules or configures the uplink transmission path of the terminal to perform the first uplink transmission path switching in the first first slot, switching from carrier 1 to carrier 2; and then the second uplink transmission path switching can be performed in the second first slot, switching from carrier 2 to carrier 1, as shown in FIG5;
Case 3: The base station schedules or configures the uplink transmission path of the terminal to perform the first uplink transmission path switching in the first first slot, from 2Tx uplink transmission on carrier 2 to 1Tx uplink transmission on carrier 1 and 1Tx uplink transmission on carrier 3; then the second uplink transmission path switching can be performed in the second first slot, from 1Tx uplink transmission on carrier 1 and 1Tx uplink transmission on carrier 3 to 2Tx uplink transmission on carrier 2, as shown in Figure 6.

In summary, according to the existing protocol: the subcarrier spacing of the first slot is determined by the maximum value of the subcarriers in the two carriers before and after the switching, so that when the terminal switches the uplink transmission path between carrier 1 and carrier 2, it switches at most once in one 15KHz UL slot. In the above-mentioned situation 2 and situation 3 of the embodiment of the present disclosure, if the terminal adopts the solution of the above-mentioned existing protocol, the terminal will be allowed to switch at most twice in one 15KHz UL slot when the uplink transmission path is switched between carrier 1 and carrier 2, which is also not allowed by the existing protocol. The solution of the present disclosure can allow the terminal to switch at most once in one 15KHz UL slot when the uplink transmission path is switched between carrier 1 and carrier 2, and in the case of three-band or four-band switching, the terminal has an increased maximum switching frequency between carrier 1 and carrier 2, and the terminal capability requirements are enhanced.

Example 2: The base station configures the terminal to allow uplink frequency band switching between band 1, band 2, band 3 and band 4. The subcarrier spacing of carrier 1 on band 1 is µ _{UL 1} = 15 kHz, the subcarrier spacing of carrier 2 on band 2 is µ _{UL 2} = 15 kHz, the subcarrier spacing of carrier 3 on band 3 is µ _{UL3} = 30 kHz, and the subcarrier spacing of carrier 4 on band 4 is µ _{UL 4}= 60 kHz. In this configuration, the subcarrier spacing µ _{UL of the first slot} is determined by the maximum subcarrier spacing among carrier 1, carrier 2, carrier 3 and carrier 4, that is, µ _{UL} = max(15 kHz, 15kHz, 30kHz, 60kHz ) = 60kHz.

As another optional embodiment, determining the first slot according to the subcarrier spacing of the uplink carrier on all configured frequency bands includes: determining multiple frequency band groups including M frequency bands according to all configured frequency bands, and determining the first slot according to the subcarrier spacing corresponding to each frequency band group, that is, specifically including:
determining multiple second frequency band groups based on all configured frequency bands; wherein each second frequency band group comprises at least two frequency bands;
determining a subcarrier spacing corresponding to each second frequency band group based on subcarrier spacings of uplink carriers on frequency bands in the second frequency band group;
determining a minimum subcarrier spacing among subcarrier spacings corresponding to all second frequency band groups;
determining a slot corresponding to the minimum subcarrier spacing as the first slot.

For example: multiple second frequency band groups are determined based on all pre-configured frequency bands, which can be all frequency band groups formed by forming a frequency band group in a manner where at least two frequency bands form one frequency band group. For example, taking three frequency bands as an example, the frequency band group includes {frequency band 1, frequency band 2}, {frequency band 1, frequency band 3}, and {frequency band 2, frequency band 3}, then multiple frequency band groups are determined to be {frequency band 1, frequency band 2}, {frequency band 1, frequency band 3}, and {frequency band 2, frequency band 3}. Alternatively, multiple frequency band groups supported by the terminal are determined based on all pre-configured frequency bands. For example, taking three frequency bands as an example, the terminal supports {frequency band 1, frequency band 2} and {frequency band 1, frequency band 3}, but does not support {frequency band 2, frequency band 3}, then multiple frequency band groups are determined to be {frequency band 1, frequency band 2} and {frequency band 1, frequency band 3}. Among them, the frequency band groups supported by the terminal can be determined based on the terminal capability or based on other methods, etc., and the embodiments of the present disclosure are not limited thereto.

Optionally, the subcarrier spacing corresponding to the target frequency band group is: the maximum subcarrier spacing among the subcarrier spacings of the uplink carriers on all frequency bands in the target frequency band group; wherein the target frequency band group is the first frequency band group or the second frequency band group. That is, the subcarrier spacing corresponding to the second frequency band group is: the maximum subcarrier spacing among the subcarrier spacings of the uplink carriers on all frequency bands in the second frequency band group.

For example: the base station configures the terminal to allow uplink frequency band switching between band 1, band 2 and band 3. The subcarrier spacing of carrier 1 on band 1 is µ _{UL 1} = 15kHz, the subcarrier spacing of carrier 2 on band 2 is µ _{UL 2} = 15kHz, and the subcarrier spacing of carrier 3 on band 3 is µ _{UL 3} = 30kHz. The base station configures three band groups that support uplink switching, namely band group 1 (band 1, band 2) = (15kHz, 15kHz), band group 2 (band 2, band 3) = (15kHz, 30kHz), and band group 3 (band 1, band 3) = (15kHz, 30kHz). In this case, the subcarrier spacing corresponding to band group 1 is 15kHz, the subcarrier spacing corresponding to band group 2 is 30kHz, and the subcarrier spacing corresponding to band group 3 is 30kHz. The subcarrier spacing of the first slot µ _{UL} =min{max(15kHz, 15kHz), max(15kHz, 30kHz), (15kHz, 30kHz)}=15kHz.

For another example: determining the first slot based on the subcarrier spacing corresponding to at least one configured first frequency band group, including but not limited to at least one of the following: determining the first slot based on the subcarrier spacing corresponding to all configured frequency band groups; determining the first slot based on the frequency band group supported by the terminal in at least one configured first frequency band group.

As an optional embodiment, determining the first slot according to the subcarrier spacing corresponding to the configured at least one first frequency band group includes:
determining a minimum subcarrier spacing among subcarrier spacings corresponding to the at least one first frequency band group;
determining a slot corresponding to the minimum subcarrier spacing as the first slot..

For example: the subcarrier spacing of the first slot is determined by the minimum value of the subcarrier spacing corresponding to the frequency band groups for uplink switching. Among them, the subcarrier spacing corresponding to each frequency band group for uplink switching is determined by the maximum value of the subcarrier spacing of the frequency bands contained in the frequency band group. Taking three-band switching as an example, the base station configures the frequency band group supporting uplink switching and the subcarrier spacing of the uplink carrier on each frequency band for the terminal. The subcarrier spacing of the first slot is determined by the minimum value of the subcarrier spacing corresponding to all frequency band groups for uplink switching, wherein the subcarrier spacing corresponding to each frequency band group for uplink switching is determined by the maximum value of the subcarrier spacing of the uplink carrier on all frequency bands in the frequency band group, that is, µ _{UL}=min {max( µ _{UL 1},µ _{UL 2}), max( µ _{UL 2},µ _{UL 3} ), max( µ _{UL 1},µ _{UL 3} )} .

### Embodiment 2:

Step 1: In the case of three-band or four-band switching, the base station configures the frequency band group supporting uplink switching and the subcarrier spacing of the uplink carrier on each frequency band. For the convenience of description, the uplink carrier on frequency band 1 is carrier 1, and the corresponding subcarrier spacing is defined as µ _{UL 1}, the carrier on frequency band 1 is carrier 2, and the corresponding carrier spacing is defined as µ _{UL 2}; and so on.

Step 2: The subcarrier spacing µ _{UL of the first slot} is determined by the minimum value of the subcarrier spacing corresponding to all frequency band groups, and the subcarrier spacing corresponding to the frequency band group is determined by the maximum subcarrier spacing of the uplink carriers on all the included frequency bands, that is, µ _{UL} =min {max( µ _{UL 1},µ _{UL 2}), max( µ _{UL 2},µ _{UL3} ), ... }.

Step 3: In a three-band or four-band handover, the terminal can switch a maximum of N times in the first slot (N is set to 1 according to the protocol or the base station configuration). This limit applies to all handover situations in a three-band or four-band handover.

Example 1: The base station configures the terminal to allow uplink frequency band switching between band 1, band 2 and band 3. The subcarrier spacing of carrier 1 on band 1 is µ _{UL 1} = 15 kHz, the subcarrier spacing of carrier 2 on band 2 is µ _{UL 2} = 15 kHz, and the subcarrier spacing of carrier 3 on band 3 is µ _{UL 3} = 30 kHz. The base station configures three band groups that support uplink switching, namely band group 1 (band 1, band 2) = ( 15 kHz, 15 kHz), band group 2 (band 2, band 3) = ( 15 kHz, 30 kHz), and band group 3 (band 1, band 3) = ( 15 kHz, 30 kHz). In this case, the subcarrier spacing corresponding to band group 1 is 15 kHz, the subcarrier spacing corresponding to band group 2 is 30 kHz, and the subcarrier spacing corresponding to band group 3 is 30 kHz. The subcarrier spacing of the first slot µ _{UL} =min {max( 15 kHz, 15 kHz),max( 15 kHz, 30 kHz), ( 15 kHz, 30 kHz)}=15kHz.

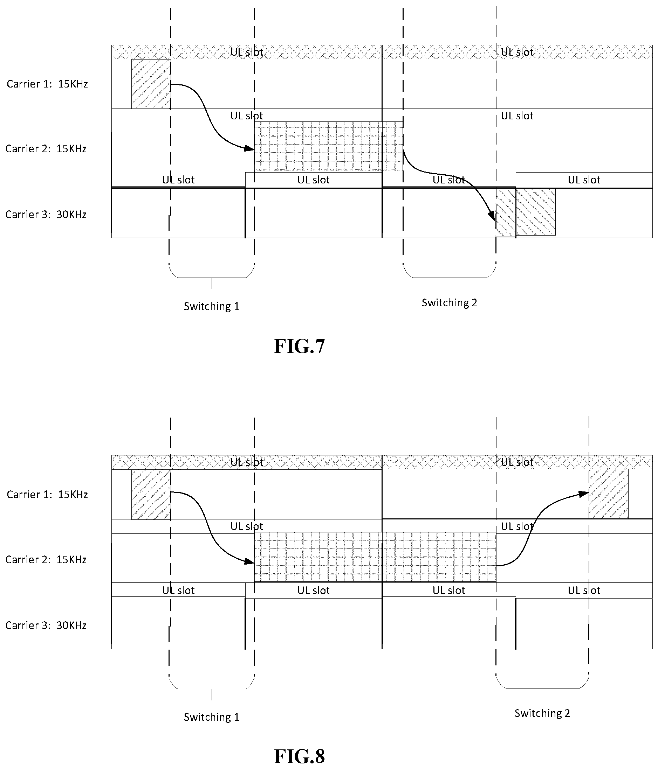

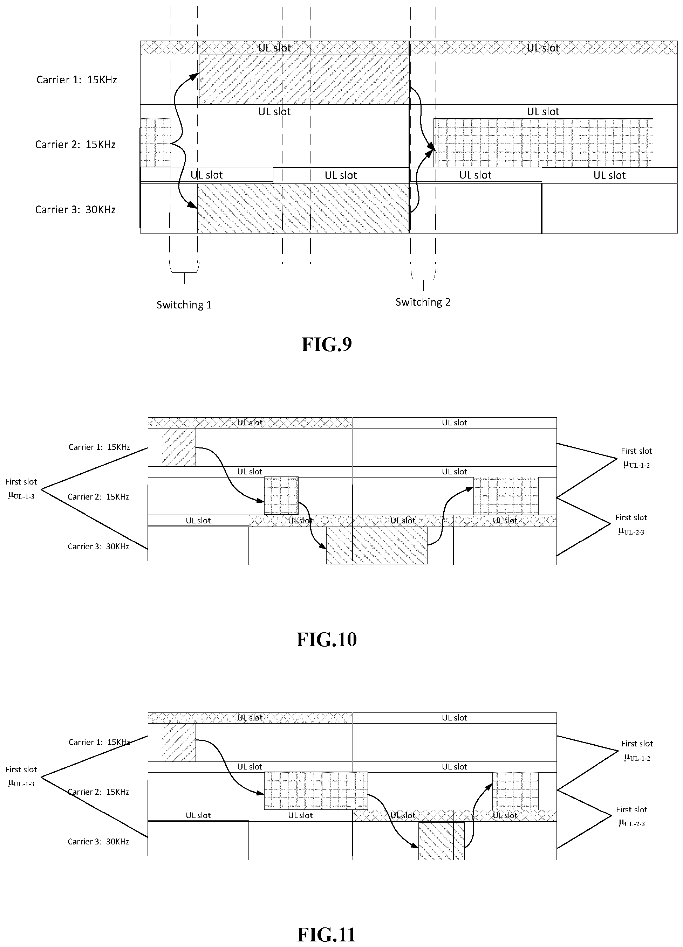

The terminal can switch at most once in the first slot, and the subcarrier spacing of the first slot is 15kHz. This restriction applies to all switching situations in the three-band switching, such as the following three situations:
Case 1: The base station schedules or configures the uplink transmission path of the terminal to perform the first uplink transmission path switching in the first first slot, switching from carrier 1 to carrier 2; then the second uplink transmission path switching can be performed in the second first slot, switching from carrier 2 to carrier 3, as shown in FIG7;
Case 2: The base station schedules or configures the uplink transmission path of the terminal to perform the first uplink transmission path switching in the first first slot, switching from carrier 1 to carrier 2; then the second uplink transmission path switching can be performed in the second first slot, switching from carrier 2 to carrier 1, as shown in FIG8;
Case 3: The base station schedules or configures the uplink transmission path of the terminal to perform the first uplink transmission path switching in the first first slot, from 2Tx uplink transmission on carrier 2 to 1Tx uplink transmission on carrier 1 and 1Tx uplink transmission on carrier 3; then the second uplink transmission path switching can be performed in the second first slot, from 1Tx uplink transmission on carrier 1 and 1Tx uplink transmission on carrier 3 to 2Tx uplink transmission on carrier 2, as shown in FIG.9;

Thus, the scenario in Example 1 where switching may occur twice within one slot is not allowed in Example 2 of the present disclosure. In summary, in this embodiment, the subcarrier spacing of the first slot is determined by the minimum subcarrier spacing in multiple carrier groups, that is, when the terminal switches between carrier 1 and carrier 3, or between carrier 2 and carrier 3, it is also necessary to limit the switching frequency between carrier 1 and carrier 2. In the case of three-band or four-band switching, the maximum switching frequency of the terminal between carrier 1 and carrier 2 is the same as the capability of the existing protocol, and the maximum switching frequency of the terminal between carrier 1 and carrier 3, or between carrier 2 and carrier 3, is reduced.

Optionally, the subcarrier spacing corresponding to the target frequency band group is: the maximum subcarrier spacing among the subcarrier spacings of the uplink carriers on all frequency bands in the target frequency band group; wherein the target frequency band group is the first frequency band group or the second frequency band group. That is, the subcarrier spacing corresponding to the first frequency band group is: the maximum subcarrier spacing among the subcarrier spacings of the uplink carriers on all frequency bands in the first frequency band group.

As an optional embodiment, the terminal determines a frequency band group supported by the terminal from at least one configured frequency band group, and determines the minimum subcarrier spacing in the subcarrier spacing corresponding to the frequency band group supported by the terminal; and determines the slot corresponding to the minimum subcarrier spacing as the first slot. For details, please refer to the above embodiment, and to avoid repetition, it will not be repeated here.

For another example: determining the first slot based on the subcarrier spacing of the uplink carrier on the frequency band before switching and the subcarrier spacing of the uplink carrier on the frequency band after switching includes: determining the maximum subcarrier spacing among the subcarrier spacing of the uplink carrier on all frequency bands before switching and the subcarrier spacing of the uplink carrier on all frequency bands after switching; and determining the slot corresponding to the maximum subcarrier spacing as the first slot.

The determining the first slot according to the subcarrier spacing of the uplink carrier on the frequency band before switching and the subcarrier spacing of the uplink carrier on the frequency band after switching includes: determining the first slot according to the subcarrier spacing of the uplink carrier on all frequency bands before switching and the subcarrier spacing of the uplink carrier on all frequency bands after switching, specifically including:
determining a maximum subcarrier spacing between subcarrier spacings of uplink carriers on the pre-switching frequency band and subcarrier spacings of uplink carriers on the post-switching frequency band;
determining a slot corresponding to the maximum subcarrier spacing as the first slot.

Optionally, the start time of the first slot corresponding to the K+1th carrier switch is before the end time of the first slot corresponding to the Kth carrier switch; and/or the start time of the first slot corresponding to the K+1th carrier switch is after the end time of the first slot corresponding to the Kth carrier switch.

Specifically, when the first slot is determined according to the subcarrier spacing of the uplink carriers on all frequency bands before switching and the subcarrier spacing of the uplink carriers on all frequency bands after switching, the terminal shall also comply with one of the following conditions when performing carrier switching:
Condition 1: The start time of the first slot corresponding to the K+1th carrier switching is before the end time of the first slot corresponding to the Kth carrier switching;
Condition 2: The start time of the first slot corresponding to the K+1th carrier switching is after the end time of the first slot corresponding to the Kth carrier switching;
Condition 3: The start time of the first slot corresponding to the K+1th carrier switching may be before the end time of the first slot corresponding to the Kth carrier switching, or the start time of the first slot corresponding to the K+1th carrier switching may be after the end time of the first slot corresponding to the Kth carrier switching.

For example: the subcarrier spacing of the first slot is determined by the maximum value of the subcarrier spacing of the uplink carriers of all frequency bands in the uplink transmission frequency band before the switching and the uplink transmission frequency band after the switching in each switching, that is, the subcarrier spacing of the first slot is dynamically determined according to all carriers participating in the switching in each switching. The subcarrier spacing of the first slot is determined by the maximum value of the subcarrier spacing of the frequency band before the switching and the frequency band after the switching. Furthermore, the subcarrier spacing of the first slot is only effective between the carriers before and after the current switching. (For example, the maximum subcarrier spacing between carrier 1 and carrier 2 is 15kHz, the maximum subcarrier spacing between carrier 2 and carrier 3 is 30kHz, the first slot is 15kHz between carrier 1 and carrier 2, and the first slot is 30kHz between carrier 2 and carrier 3). In three-band or four-band switching, the base station configures the subcarrier spacing of the carriers on the frequency band for the terminal. That is, the start time of the first slot corresponding to the K+1th carrier switch may be before the end time of the first slot corresponding to the Kth carrier switch, and the start time of the first slot corresponding to the K+1th carrier switch may be after the end time of the first slot corresponding to the Kth carrier switch. That is, the first slot corresponding to the K+1th carrier switch may overlap with the first slot corresponding to the Kth carrier switch, or may not overlap.

Another example: In three-band or four-band switching, the base station configures the subcarrier spacing of the carrier on each frequency band for the terminal. The subcarrier spacing of the first slot is determined by the maximum value of all subcarrier spacings in the uplink transmission frequency band before the switching and the uplink transmission frequency band after the switching in each switching, that is, the subcarrier spacing of the first slot is dynamically determined according to all carriers participating in the switching in each switching. The subcarrier spacing of the first slot is determined by the maximum value of the subcarrier spacing of the frequency band before the switching and the frequency band after the switching. Furthermore, the subcarrier spacing of the first slot is effective between the uplink carriers on all configured frequency bands. (For example, the maximum subcarrier spacing between carrier 1 and carrier 2 is 15kHz, and the maximum subcarrier spacing between carrier 2 and carrier 3 is 30kHz. When switching between carrier 1 and carrier 2, the first slot is 15kHz between carrier 1 and carrier 3. When switching between carrier 2 and carrier 3, the first slot is 30kHz between carrier 1 and carrier 3. There is no time overlap between the two first slots), that is, the earliest start time of the next switching is after the end of the current first slot, that is, the start time of the first slot corresponding to the K+1th carrier switching, and after the end time of the first slot corresponding to the Kth carrier switching.

### Embodiment 3:

Step 1: In the case of three-band or four-band switching, the base station configures the frequency bands that support uplink switching and the subcarrier spacing of the carriers on each frequency band. For the convenience of description, the carrier on frequency band 1 is carrier 1, and the corresponding carrier spacing is defined as µ _{UL 1;} the carrier on frequency band 2 is carrier 2, and the corresponding carrier spacing is defined as µ _{UL 2;} and so on.

Step 2: The subcarrier spacing µ _{UL of the first slot} is determined by the maximum value of the carrier spacing before and after the switch gap. If the carriers before and after the switch gap are carrier 1 and carrier 2 respectively, then µ _{UL-1-2} = max( µ _{UL 1}, µ _{UL 2} ); if the carriers before and after the switch gap are carrier 1 and carrier 3 respectively, then µ _{UL -1-3} = max( µ _{UL 1}, µ _{UL 3}); if the carriers before and after the switch gap are carrier 2 and carrier 3 respectively, then µ _{UL -2-3} = max( µ _{UL 2}, µ _{UL 3} );

Step 3: The first slot µ _{UL -1-2} is effective between carrier 1 and carrier 2, the first slot µ _{UL -1-3} is effective between carrier 1 and carrier 3, and the first slot µ _{UL -2-3} is effective between carrier 2 and carrier 3.

Example: The base station configures the terminal to allow uplink frequency band switching between band 1, band 2 and band 3. The subcarrier spacing of carrier 1 on band 1 is µ _{UL 1} =15 kHz, the subcarrier spacing of carrier 2 on band 2 is µ _{UL} 2 =15 kHz, and the subcarrier spacing of carrier 3 on band 3 is µ _{UL 3}=30 kHz. The switching between carrier 1 and carrier 2 corresponds to the first slot µ _{UL -1-2} = max( 15 kHz, 15 kHz)=15kHz, the switching between carrier 1 and carrier 3 corresponds to the first slot µ _{UL -1-3} = max( 15 kHz, 30 kHz)=30kHz, and the switching between carrier 2 and carrier 3 corresponds to the first slot µ _{UL -2-3} = max( 15 kHz, 30 kHz)=30kHz. As shown in FIG10, the terminal first switches between carrier 1 and carrier 3, and the first slot µ _{UL -1-2} takes effect; then the terminal switches between carrier 2 and carrier 3, and the first slot µ _{UL-2-3} takes effect. In this solution, there may be a time domain overlap between the first slot µ _{UL -1-2} and the first slot µ _{UL -2-3}.

### Embodiment 4:

Step 1: In the case of three-band or four-band switching, the base station configures the frequency bands that support uplink switching and the subcarrier spacing of the carriers on each frequency band. For the convenience of description, the carrier on frequency band 1 is carrier 1, and the corresponding carrier spacing is defined as µ _{UL 1}, the carrier on frequency band 2 is carrier 2, and the corresponding carrier spacing is defined as µ _{UL 2}; and so on.

Step 2: The subcarrier spacing µ _{UL of the first slot} is determined by the maximum value of the carrier spacing before and after the switch gap. If the carriers before and after the switch gap are carrier 1 and carrier 2 respectively, then µ _{UL - 1-2} = max( µ _{UL 1}, µ _{UL 2} ); if the carriers before and after the switch gap are carrier 1 and carrier 3 respectively, then µ _{UL -1-3} = max( µ _{UL 1}, µ _{UL 3}); if the carriers before and after the switch gap are carrier 2 and carrier 3 respectively, then µ _{UL -2-3} = max( µ _{UL 2}, µ _{UL 3} );

Step 3: The first slot is effective between the uplink carriers of the configured 3 or 4 frequency bands, and there is no time domain overlap between the first slot µ _{UL-1-2}, the first slot µ _{UL-1-3}, and the first slot µ _{UL -2-3}. The first slot effective in the next handover must start after the first slot effective in the previous handover ends.

Example: The base station configures the terminal to allow uplink frequency band switching between frequency band 1, frequency band 2 and frequency band 3. The subcarrier spacing of carrier 1 on frequency band 1 is µ _{UL 1} =15 kHz, the subcarrier spacing of carrier 2 on frequency band 2 is µ _{UL 2}=15 kHz, and the subcarrier spacing of carrier 3 on frequency band 3 is µ _{UL 3}=30 kHz. The first slot corresponding to the switching between carrier 1 and carrier 2 is µ _{UL -1-2} = max( 15 kHz, 15 kHz)=15kHz, the first slot corresponding to the switching between carrier 1 and carrier 3 is µ _{UL-1-3} = max( 15 kHz, 30 kHz)=30kHz, the first slot corresponding to the switching between carrier 2 and carrier 3 is µ _{UL -2-3} = max( 15 kHz, 30 kHz)=30kHz, and the first slot corresponding to the switching between carriers 1, 2 and 3 is µ _{UL -2-3} = max( 15 kHz, 15kHz, 30 kHz)=30kHz. As shown in FIG11, the terminal first switches between carrier 1 and carrier 2, and the first slot µ _{UL -1-2} takes effect; then the terminal switches between carrier 2 and carrier 3, and the first slot µ _{UL -2-3} takes effect. And in this solution, there is no time domain overlap between the first slot µ _{UL -1-2} and the second slot µ _{UL -2-3}. _{That is}, _{the first slot} µ _{UL -2-3} must start after the first slot µ _{UL -1-2} ends.

It should be noted that it is not excluded that the method for determining the first slot in the above embodiment is indicated by the network side, nor is it excluded that the method for determining the first slot in the above embodiment is determined by the terminal capability reporting method. If the terminal supports one or more of the above embodiments, it is reported to the network device in the form of terminal capabilities. The network device determines which method is configured to determine the highest uplink transmission channel switching frequency or the subcarrier spacing of the first slot according to the capability configuration reported by the terminal.

Specifically, before the terminal determines the first slot for carrier switching according to the subcarrier spacing of the uplink carriers on the multiple frequency bands, the method further includes:
the terminal receives indication information sent by a network device; where the indication information is configured to indicate that the first slot is determined according to the subcarrier spacing of uplink carriers on multiple frequency bands.

Optionally, before the terminal receives the indication information sent by the network device, the method further includes:
the terminal sends terminal capability information to the network device; where the terminal capability information indicates a capability of determining the first slot supported by the terminal, and the indication information is determined according to the terminal capability information.

For example: the capability of determining the first slot supported by the terminal is also the method supported by the terminal to determine the first slot according to the subcarrier spacing of the uplink carrier on multiple frequency bands. The terminal capability information may carry an index of the method for determining the first slot to explicitly indicate the capability of determining the first slot supported by the terminal; or the terminal capability information may carry the capability parameters of the terminal, etc. to implicitly indicate the capability of determining the first slot supported by the terminal. Correspondingly, the indication information may also be an explicit or private indication to determine the first slot according to the subcarrier spacing of the uplink carrier on multiple frequency bands, such as the indication information is an index corresponding to the method for determining the first slot, or a terminal capability parameter corresponding to the method for determining the first slot, etc., which is not limited to the embodiments of the present disclosure.

Optionally, the indication information is configured to indicate one of the following:
determining the first slot based on subcarrier spacings of uplink carriers on all configured frequency bands;
determining the first slot based on subcarrier spacings corresponding to at least one first frequency band group, where the first frequency band group comprises at least two frequency bands, and the subcarrier spacings corresponding to the first frequency band group are determined based on subcarrier spacings of uplink carriers on each frequency band in the first frequency band group;
determining the first slot based on subcarrier spacings of uplink carriers on a pre-switching frequency band and subcarrier spacings of uplink carriers on a post-switching frequency band.

Optionally, the terminal capability information indicates at least one of the following, or the capability of determining the first slot supported by the terminal includes at least one of the following, or the manner in which the first slot is determined according to the subcarrier spacing of uplink carriers on multiple frequency bands supported by the terminal includes at least one of the following :
determining the first slot based on subcarrier spacings of uplink carriers on all configured frequency bands;
determining the first slot based on subcarrier spacings corresponding to at least one first frequency band group, where the first frequency band group comprises at least two frequency bands, and the subcarrier spacings corresponding to the first frequency band group are determined based on subcarrier spacings of uplink carriers on each frequency band in the first frequency band group; or
determining the first slot based on subcarrier spacings of uplink carriers on a pre-switching frequency band and subcarrier spacings of uplink carriers on a post-switching frequency band.

In the above scheme, by determining the switching slot when switching between three or four frequency bands, it is beneficial to increase the maximum switching frequency when switching between three or four frequency bands, and avoid the problem of complex terminal implementation caused by frequent switching between different frequency bands.

The terminal in the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

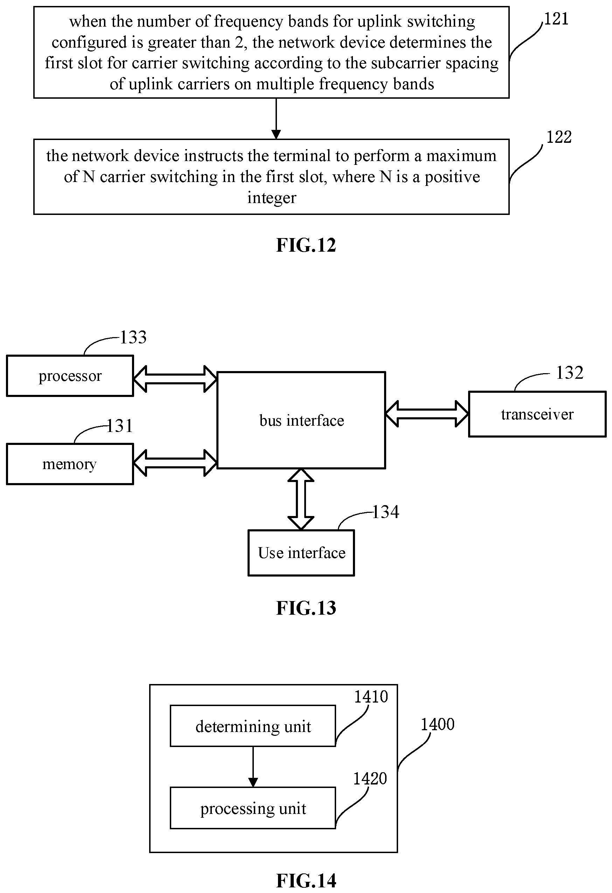

As shown in FIG. 12, the embodiment of the present disclosure provides a carrier switching method, comprising the following steps:
Step 121: when the number of frequency bands for uplink switching configured is greater than 2, the network device determines the first slot for carrier switching according to the subcarrier spacing of uplink carriers on multiple frequency bands.
Step 122: the network device instructs the terminal to perform a maximum of N carrier switching in the first slot, where N is a positive integer.

Optionally, the value of N is predefined by the protocol or configured by the network side (such as by a high-level configuration), and N is 1, or other values, etc. The embodiments of the present disclosure are not limited thereto.

In this embodiment, when the number of frequency bands for uplink switching configured is greater than 2, the network device determines the first slot for carrier switching based on the subcarrier spacing of the uplink carriers on multiple frequency bands, and can ensure that the number of scheduling of uplink transmission does not exceed N times within the first slot, that is, instructs the terminal to perform a maximum of N carrier switching. On the one hand, it realizes the determination of the switching slot when switching between three or four frequency bands, and is conducive to increasing the maximum switching frequency when switching between three or four frequency bands, avoiding the problem of complex terminal implementation caused by frequent switching between different frequency bands.

Optionally, determining the first slot for carrier switching according to the subcarrier spacing of uplink carriers on multiple frequency bands includes at least one of the following:
determining the first slot according to the subcarrier spacing of the uplink carrier on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the determining the first slot according to the subcarrier spacing of uplink carriers on all configured frequency bands includes:
determining a maximum subcarrier spacing among subcarrier spacings of uplink carriers on all configured frequency bands;
determining the slot of the maximum subcarrier spacing as the first slot.

Optionally, the determining the first slot according to the subcarrier spacing of uplink carriers on all configured frequency bands includes:
determining a plurality of second frequency band groups according to all configured frequency bands; wherein the second frequency band groups include at least two of the frequency bands;
determining, according to the subcarrier spacing of the uplink carrier on the frequency band in the second frequency band group, the subcarrier spacing corresponding to each of the second frequency band groups;
determining a minimum subcarrier spacing among the subcarrier spacings corresponding to all second frequency band groups;
determining a slot corresponding to the minimum subcarrier spacing as the first slot.

Optionally, determining the first slot according to a subcarrier spacing corresponding to at least one configured first frequency band group includes:
minimum subcarrier spacing among the subcarrier spacings corresponding to at least one first frequency band group configured;
determining a slot corresponding to the minimum subcarrier spacing as the first slot.

Optionally, the subcarrier spacing corresponding to the target frequency band group is: the maximum subcarrier spacing among the subcarrier spacings of uplink carriers on all frequency bands in the target frequency band group;

The target frequency band group is the first frequency band group or the second frequency band group.

Optionally, determining the first slot according to a subcarrier spacing of an uplink carrier on a frequency band before switching and a subcarrier spacing of an uplink carrier on a frequency band after switching includes:
determining a maximum subcarrier spacing between the subcarrier spacing of the uplink carrier on the frequency band before the switching and the subcarrier spacing of the uplink carrier on the frequency band after the switching;
determining the slot corresponding to the maximum subcarrier spacing as the first slot.

Optionally, the start time of the first slot corresponding to the K+1th carrier switching is before the end time of the first slot corresponding to the Kth carrier switching; and/or,
the start time of the first slot corresponding to the K+1th carrier switching is after the end time of the first slot corresponding to the Kth carrier switching;
K is a positive integer.

Optionally, before the network device instructs the terminal to perform a maximum of N carrier switching in the first slot, the method further includes:
the network device sends indication information to the terminal; wherein the indication information is configured to indicate that the first slot is determined according to the subcarrier spacing of uplink carriers on multiple frequency bands.

Optionally, before the network device sends the indication information to the terminal, the method further includes:
the network device receives terminal capability information sent by the terminal; where the terminal capability information indicates a capability of determining the first slot supported by the terminal;
the network device sending instruction information to the terminal, including:
   the network device sends the indication information to the terminal according to the terminal capability information.

Optionally, the indication information is configured to indicate one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group;
determining the first slot according to the subcarrier spacing of the uplink carrier on the frequency band before the switching and the subcarrier spacing of the uplink carrier on the frequency band after the switching.

Optionally, the terminal capability information indicates at least one of the following:
determining the first slot according to the subcarrier spacing of the uplink carriers on all configured frequency bands;
determining the first slot according to the subcarrier spacing corresponding to at least one configured first frequency band group; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

The carrier switching method on the network side in the present disclosure corresponds to the carrier switching method on the terminal side, and their embodiments can refer to each other. To avoid repetition, they will not be described again here.

The network device of the present disclosure may be a base station, which may include multiple cells providing services for terminals. Depending on the specific application scenario, the base station may also be called an access point, or may be a device in an access network that communicates with a wireless terminal device through one or more sectors on an air interface, or may be another name. The network device may be configured to interchange received air frames with Internet Protocol (IP) packets, and serve as a router between the wireless terminal device and the rest of the access network, wherein the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (Global System for Mobile communications, GSM) or Code Division Multiple Access (Code Division Multiple Access, CDMA), or a network device (NodeB) in Wide-band Code Division Multiple Access (WCDMA), or an evolutionary network device (evolutional Node B, eNB or e-NodeB) in the long term evolution (long term evolution, LTE) system, a 5G base station (gNB) in the 5G network architecture (next generation system), or a home evolved Node B (Home evolved Node B, HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

The above embodiments introduce the carrier switching method disclosed in the present invention. The following embodiments will further illustrate the corresponding apparatus, terminal and network device in conjunction with the accompanying drawings.

As shown in FIG13, an embodiment of the present disclosure provides a carrier switching device, including a memory 131, a transceiver 132, and a processor 133; wherein the memory 131 is configured to store a computer program; the transceiver 132 is configured to send and receive data under the control of the processor 133; the transceiver 132 is configured to receive and send data under the control of the processor 133; the processor 133 is configured to read the computer program in the memory 131 to perform:
when the number of frequency bands for uplink switching configured is greater than 2, determining the first slot for carrier switching according to the subcarrier spacing of uplink carriers on multiple frequency bands;
performing, in the first slot, a maximum of N carrier switching where N is a positive integer.

Optionally, the processor 133 is configured to read the computer program in the memory 131 to perform:
receiving indication information sent by a network device; wherein the indication information is configured to indicate that the first slot is determined according to the subcarrier spacing of uplink carriers on multiple frequency bands.

Optionally, the indication information is configured to indicate one of the following:
determining the first slot according to the subcarrier spacing of the uplink carrier on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group;

The first slot is determined according to the subcarrier spacing of the uplink carrier on the frequency band before the switching and the subcarrier spacing of the uplink carrier on the frequency band after the switching.

Optionally, the processor 133 is configured to read the computer program in the memory 131 to perform:
sending terminal capability information to a network device; wherein the terminal capability information indicates a capability supported by the terminal to determine the first slot, and the indication information is determined according to the terminal capability information.

Optionally, the terminal capability information indicates at least one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the processor 133 is configured to read the computer program in the memory 131 and perform at least one of the following operations:
determining the first slot according to the subcarrier spacing of the uplink carriers on all configured frequency bands;
determining the first slot according to the subcarrier spacing corresponding to at least one configured first frequency band group; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the processor 133 is configured to read the computer program in the memory 131 to perform:
determining a maximum subcarrier spacing among subcarrier spacings of uplink carriers on all configured frequency bands;
determining the slot of the maximum subcarrier spacing as the first slot.

Optionally, the processor 133 is configured to read the computer program in the memory 131 to perform:
determining a plurality of second frequency band groups according to all configured frequency bands; wherein the second frequency band groups include at least two of the frequency bands;
determining, according to the subcarrier spacing of the uplink carrier on the frequency band in the second frequency band group, the subcarrier spacing corresponding to each of the second frequency band groups;
determining a minimum subcarrier spacing among the subcarrier spacings corresponding to all second frequency band groups;
determining a slot corresponding to the maximum subcarrier spacing as the first slot.

Optionally, the processor 133 is configured to read the computer program in the memory 131 to perform:
determining a minimum subcarrier spacing among the subcarrier spacings corresponding to at least one first frequency band group configured;
determining a slot corresponding to the maximum subcarrier spacing as the first slot t.

Optionally, the subcarrier spacing corresponding to the target frequency band group is: the maximum subcarrier spacing among the subcarrier spacings of uplink carriers on all frequency bands in the target frequency band group;

The target frequency band group is the first frequency band group or the second frequency band group.

Optionally, the processor 133 is configured to read the computer program in the memory 131 to perform:
determining a maximum subcarrier spacing between the subcarrier spacing of the uplink carrier on the frequency band before switching and the subcarrier spacing of the uplink carrier on the frequency band after switching;
determining the slot corresponding to the maximum subcarrier spacing as the first slot.

Optionally, the start time of the first slot corresponding to the K+1th carrier switching is before the end time of the first slot corresponding to the Kth carrier switching; and/or,
the start time of the first slot corresponding to the K+1th carrier switching is after the end time of the first slot corresponding to the Kth carrier switching;
K is a positive integer.

Optionally, the value of N is predefined by the protocol or configured by the network side, and N is 1.

In Figure 13, the bus architecture may include any number of interconnected buses and bridges, specifically one or more processors represented by processor 133 and various circuits of memory represented by memory 131 are linked together. The bus architecture can also link various other circuits such as peripheral devices, voltage regulators and power management circuits together, which are all well known in the art, so they are not further described herein. The bus interface provides an interface. The transceiver 132 can be a plurality of components, that is, including a transmitter and a receiver, providing a unit for communicating with various other devices on a transmission medium, and these transmission media include wireless channels, wired channels, optical cables and other transmission media. For different user devices, the user interface 134 can also be an interface that can connect external and internal devices, and the connected devices include but are not limited to keypads, displays, speakers, microphones, joysticks, etc. The processor 133 is responsible for managing the bus architecture and general processing, and the memory 131 can store data used by the processor 133 when performing operations.

The processor 133 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided by the embodiment of the present disclosure can implement all the method steps implemented by the above-mentioned terminal-side carrier switching method embodiment, and can achieve the same technical effect. The parts and beneficial effects of this embodiment that are the same as the method embodiment will not be described in detail here.

In FIG. 14, an embodiment of the present disclosure provides a terminal 1400, including:
a determining unit 1410 configured to determine a first slot for carrier switching according to subcarrier spacings of uplink carriers on multiple frequency bands when the number of frequency bands for uplink switching configured is greater than 2;
a processing unit 1420 configured to perform a maximum of N carrier switching in the first slot, where N is a positive integer.

Optionally, the terminal 1400 further includes:
a receiving unit configured to receive indication information sent by a network device; wherein the indication information is configured to indicate that the first slot is determined according to the subcarrier spacing of uplink carriers on multiple frequency bands.

Optionally, the indication information is configured to indicate one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group;
determining the first slot according to the subcarrier spacing of the uplink carrier on the frequency band before the switching and the subcarrier spacing of the uplink carrier on the frequency band after the switching.

Optionally, the terminal 1400 further includes:
a sending unit configured to send terminal capability information to a network device; wherein the terminal capability information indicates a capability supported by the terminal to determine the first slot, and the indication information is determined according to the terminal capability information.

Optionally, the terminal capability information indicates at least one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the determining unit 1410 is further configured to perform at least one of the following:
determining the first slot according to the subcarrier spacing of the uplink carrier on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the determining unit 1410 is further configured to:
determine a maximum subcarrier spacing among subcarrier spacings of uplink carriers on all configured frequency bands;

The slot of the maximum subcarrier spacing is determined as the first slot.

Optionally, the determining unit 1410 is further configured to:
determine a plurality of second frequency band groups according to all configured frequency bands; wherein the second frequency band groups include at least two of the frequency bands;
determine, according to the subcarrier spacing of the uplink carrier on the frequency band in the second frequency band group, the subcarrier spacing corresponding to each of the second frequency band groups;
determine a minimum subcarrier spacing among the subcarrier spacings corresponding to all second frequency band groups;
determine a slot corresponding to the minimum subcarrier spacing is determined as the first slot.

Optionally, the determining unit 1410 is further configured to:
determine a minimum subcarrier spacing among the subcarrier spacings corresponding to at least one first frequency band group configured;
determine a slot corresponding to the minimum subcarrier spacing as the first slot..

Optionally, the subcarrier spacing corresponding to the target frequency band group is: the maximum subcarrier spacing among the subcarrier spacings of uplink carriers on all frequency bands in the target frequency band group;
the target frequency band group is the first frequency band group or the second frequency band group.

Optionally, the determining unit 1410 is further configured to:
determine a maximum subcarrier spacing between the subcarrier spacing of the uplink carrier on the frequency band before switching and the subcarrier spacing of the uplink carrier on the frequency band after switching;
determine the slot corresponding to the maximum subcarrier spacing as the first slot.

Optionally, the start time of the first slot corresponding to the K+1th carrier switching is before the end time of the first slot corresponding to the Kth carrier switching; and/or,
the start time of the first slot corresponding to the K+1th carrier switching is after the end time of the first slot corresponding to the Kth carrier switching;
K is a positive integer.

Optionally, the value of N is predefined by the protocol or configured by the network side, and N is 1.

It should be noted here that the above-mentioned terminal provided in the embodiment of the present disclosure can implement all the method steps implemented in the above-mentioned terminal side carrier switching method embodiment, and can achieve the same technical effect. The parts and beneficial effects of this embodiment that are the same as the method embodiment will not be described in detail here.

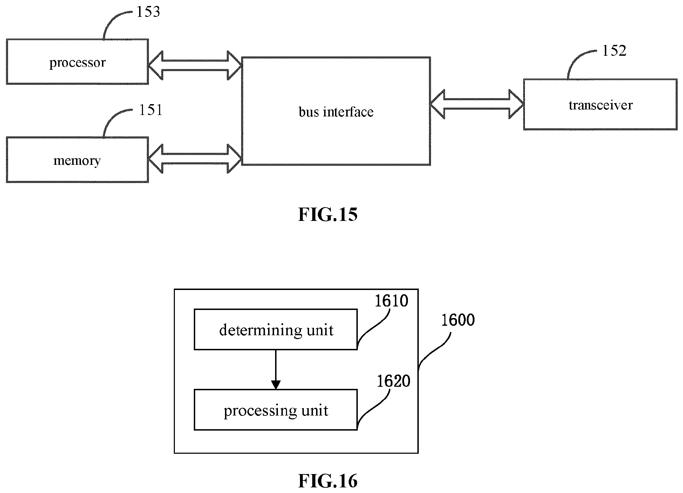

As shown in FIG. 15, this embodiment provides a carrier switching device, including a memory 151, a transceiver 152, and a processor 153; wherein the memory 151 is configured to store a computer program; the transceiver 152 is configured to send and receive data under the control of the processor 153; for example, the transceiver 152 is configured to receive and send data under the control of the processor 153; the processor 153 is configured to read the computer program in the memory 151 to perform:
when the number of frequency bands for uplink switching configured is greater than 2, determining the first slot for carrier switching according to the subcarrier spacing of uplink carriers on multiple frequency bands;
instructing the terminal to perform a maximum of N carrier switching in the first slot, where N is a positive integer.

Optionally, the processor 153 is configured to read the computer program in the memory 151 to perform:
sending indication information to the terminal; wherein the indication information is configured to indicate that the first slot is determined according to the subcarrier spacing of the uplink carrier on multiple frequency bands.

Optionally, the first strategy is one of the following:
determining the first slot according to the subcarrier spacing of the uplink carrier on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group;
determining the first slot according to the subcarrier spacing of the uplink carrier on the frequency band before the switching and the subcarrier spacing of the uplink carrier on the frequency band after the switching.

Optionally, the processor 153 is configured to read the computer program in the memory 151 to perform:
receiving terminal capability information sent by the terminal; wherein the terminal capability information indicates a capability of determining the first slot supported by the terminal;
sending the indication information to the terminal according to the terminal capability information.

Optionally, the terminal capability information indicates at least one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before switching and the subcarrier spacing of the uplink carrier on the frequency band after switching

Optionally, the processor 153 is configured to read the computer program in the memory 151 and perform at least one of the following operations:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the processor 153 is configured to read the computer program in the memory 151 to perform:
determining a maximum subcarrier spacing among subcarrier spacings of uplink carriers on all configured frequency bands;
determining the slot of the maximum subcarrier spacing as the first slot.

Optionally, the processor 153 is configured to read the computer program in the memory 151 to perform:
determining a plurality of second frequency band groups according to all configured frequency bands; wherein the second frequency band groups include at least two of the frequency bands;
determining, according to the subcarrier spacing of the uplink carrier on the frequency band in the second frequency band group, the subcarrier spacing corresponding to each of the second frequency band groups;
determining a minimum subcarrier spacing among the subcarrier spacings corresponding to all second frequency band groups;
determining a slot corresponding to the minimum subcarrier spacing is determined as the first slot.

Optionally, the processor 153 is configured to read the computer program in the memory 151 to perform:
determining a minimum subcarrier spacing among the subcarrier spacings corresponding to at least one first frequency band group configured;
determining a slot corresponding to the minimum subcarrier spacing is determined as the first slot.

Optionally, the subcarrier spacing corresponding to the target frequency band group is: the maximum subcarrier spacing among the subcarrier spacings of uplink carriers on all frequency bands in the target frequency band group;
the target frequency band group is the first frequency band group or the second frequency band group.

Optionally, the processor 153 is configured to read the computer program in the memory 151 to perform:
determining a maximum subcarrier spacing between the subcarrier spacing of the uplink carrier on the frequency band before switching and the subcarrier spacing of the uplink carrier on the frequency band after switching;
determining the slot corresponding to the maximum subcarrier spacing as the first slot.

Optionally, the start time of the first slot corresponding to the K+1th carrier switching is before the end time of the first slot corresponding to the Kth carrier switching; and/or,

The start time of the first slot corresponding to the K+1th carrier switching is after the end time of the first slot corresponding to the Kth carrier switching;
K is a positive integer.

Optionally, the value of N is predefined by the protocol or configured by the network side, and N is 1.

In Figure 15, the bus architecture can include any number of interconnected buses and bridges, specifically one or more processors represented by processor 153 and various circuits of memory represented by memory 151 are linked together. The bus architecture can also link various other circuits such as peripheral devices, voltage regulators, and power management circuits together, which are all well known in the art, so they are not further described herein. The bus interface provides an interface. The transceiver 152 can be a plurality of components, that is, including a transmitter and a receiver, providing a unit for communicating with various other devices on a transmission medium, and these transmission media include transmission media such as wireless channels, wired channels, and optical cables. The processor 153 is responsible for managing the bus architecture and general processing, and the memory 151 can store data used by the processor 153 when performing operations.

Optionally, the processor 153 may be a CPU, an ASIC, an FPGA or a CPLD, and the processor may also adopt a multi-core architecture.

The processor executes any of the methods provided in the embodiments of the present disclosure by invoking computer programs stored in the memory, in accordance with the obtained executable instructions. The processor and the memory may also be physically separated in their arrangement.

It should be noted here that the above-mentioned device provided in the embodiment of the present disclosure can implement all the method steps implemented in the above-mentioned network device side carrier switching method embodiment, and can achieve the same technical effect. The parts and beneficial effects of this embodiment that are the same as the method embodiment will not be described in detail here.

In FIG. 16, an embodiment of the present disclosure provides a network device 1600, including:
a determining unit 1610 configured to determine a first slot for carrier switching according to subcarrier spacings of uplink carriers on multiple frequency bands when the number of frequency bands for uplink switching configured is greater than 2;
a processing unit 1620 configured to instruct the terminal to perform a maximum of N carrier switching in the first slot, where N is a positive integer.

Optionally, the network device 1600 further includes:
a sending unit configured to send indication information to a terminal; wherein the indication information is configured to indicate that the first slot is determined according to the subcarrier spacing of uplink carriers on multiple frequency bands.

Optionally, the indication information is configured to indicate one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group;
determining the first slot according to the subcarrier spacing of the uplink carrier on the frequency band before the switching and the subcarrier spacing of the uplink carrier on the frequency band after the switching.

Optionally, the network device 1600 further includes:
a receiving unit, configured to receive terminal capability information sent by the terminal; wherein the terminal capability information indicates a capability supported by the terminal to determine the first slot;
the sending unit is further configured to send the indication information to the terminal according to the terminal capability information.

Optionally, the terminal capability information indicates at least one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the determining unit 1610 is further configured to perform at least one of the following:
determining the first slot according to the subcarrier spacing of the uplink carriers on all configured frequency bands;
determining the first slot according to the subcarrier spacing corresponding to at least one first frequency band group configured; wherein the first frequency band group includes at least two frequency bands, and the subcarrier spacing corresponding to the first frequency band group is determined according to the subcarrier spacing of the uplink carrier on each frequency band in the first frequency band group; or
determining the first slot according to the subcarrier spacing of the uplink carrier on the frequency band before the switching and the subcarrier spacing of the uplink carrier on the frequency band after the switching.

Optionally, the determining unit 1610 is further configured to:
determining a maximum subcarrier spacing among subcarrier spacings of uplink carriers on all configured frequency bands;
determining the slot of the maximum subcarrier spacing as the first slot.

Optionally, the determining unit 1610 is further configured to:
determining a plurality of second frequency band groups according to all configured frequency bands; wherein the second frequency band groups include at least two of the frequency bands;
determining, according to the subcarrier spacing of the uplink carrier on the frequency band in the second frequency band group, the subcarrier spacing corresponding to each of the second frequency band groups;
determining a minimum subcarrier spacing among the subcarrier spacings corresponding to all second frequency band groups;
determining a slot corresponding to the minimum subcarrier spacing is determined as the first slot.

Optionally, the determining unit 1610 is further configured to:
determining a minimum subcarrier spacing among the subcarrier spacings corresponding to at least one first frequency band group configured;
determining a slot corresponding to the minimum subcarrier spacing is determined as the first slot.

Optionally, the subcarrier spacing corresponding to the target frequency band group is: the maximum subcarrier spacing among the subcarrier spacings of uplink carriers on all frequency bands in the target frequency band group;

The target frequency band group is the first frequency band group or the second frequency band group.

Optionally, the determining unit 1610 is further configured to:
determining a maximum subcarrier spacing between the subcarrier spacing of the uplink carrier on the frequency band before switching and the subcarrier spacing of the uplink carrier on the frequency band after switching;
The slot corresponding to the maximum subcarrier spacing is determined as the first slot.

Optionally, the start time of the first slot corresponding to the K+1th carrier switching is before the end time of the first slot corresponding to the Kth carrier switching; and/or,
The start time of the first slot corresponding to the K+1th carrier switching is after the end time of the first slot corresponding to the Kth carrier switching;
K is a positive integer.

Optionally, the value of N is predefined by the protocol or configured by the network side, and N is 1.

It should be noted here that the above-mentioned network device provided in the embodiment of the present disclosure can implement all the method steps implemented in the above-mentioned network device side carrier switching method embodiment, and can achieve the same technical effect. The parts and beneficial effects of this embodiment that are the same as the method embodiment will not be described in detail here.

An embodiment of the present disclosure also provides a processor-readable storage medium, which stores a computer program, and the computer program is configured to enable the processor to execute the steps of the method for carrier switching on the terminal side, or the computer program is configured to enable the processor to execute the steps of the method for carrier switching on the network device side.

The processor-readable storage medium may be any available medium or data storage device that can be accessed by the processor, including but not limited to magnetic storage (such as floppy disks, hard disks, magnetic tapes, magneto-optical disks (MO), etc.), optical storage (such as compact disks ( CD ), digital video disks (DVD), Blu-ray Discs (BD), high-definition versatile disks (HVD), etc.), and semiconductor storage (such as read-only memory (ROM), erasable programmable read-only memory (EPROM), electrically erasable programmable read-only memory (EEPROM), non-volatile memory (NAND FLASH), solid-state disk (SSD)), etc.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (ROM), random access memory (RAM), disk or optical disk, etc. Various media that can store program codes.

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first" and "second" and the like in the present disclosure are configured to distinguish similar objects, and are not necessarily configured to describe a specific order or sequence. It should be understood that the data used in this way can be interchanged where appropriate, so that the embodiments of the present disclosure described here, such as those illustrated or described here, are implemented in a sequence other than the sequence. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of " and/or " in the specification and claims represents at least one of the connected objects, such as A and/or B and/or C, indicating that A alone, B alone, C alone, and A and B are present, B and C are present, A and C are present, and A, B and C are present in 7 situations. Similarly, the use of "at least one of A and B" in the specification and claims should be understood as "A alone, B alone, or A and B are present".

In addition, it should be pointed out that in the apparatus and method of the present disclosure, it is obvious that each component or each step can be decomposed and / or recombined. These decompositions and/or recombinations should be regarded as equivalent schemes of the present disclosure. Moreover, the steps of performing the above-mentioned series of processing can naturally be performed in chronological order according to the order of description, but it is not necessary to perform them in chronological order, and some steps can be performed in parallel or independently of each other. For those of ordinary skill in the art, it is understandable that all or any steps or components of the method and apparatus of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A carrier switching method, comprising:
in a case where a number of frequency bands for uplink switching configured is greater than 2, determining, by a terminal, a first slot for carrier switching based on subcarrier spacings of uplink carriers on multiple frequency bands;
performing, by the terminal, a maximum of N carrier switches within the first slot, wherein N is a positive integer.

2. The carrier switching method according to claim 1, wherein before determining the first slot for carrier switching based on subcarrier spacings of uplink carriers on multiple frequency bands, the method further comprises:
receiving, by the terminal, indication information sent by a network device; wherein the indication information is configured to indicate determining the first slot based on subcarrier spacings of uplink carriers on multiple frequency bands.

3. The carrier switching method according to claim 2, wherein before receiving the indication information sent by the network device, the method further comprises:
sending, by the terminal, terminal capability information to the network device; wherein the terminal capability information indicates a capability of the terminal to determine the first slot, and the indication information is determined based on the terminal capability information.

4. The carrier switching method according to any one of claims 1 to 3, wherein determining the first slot for carrier switching based on subcarrier spacings of uplink carriers on multiple frequency bands comprises at least one of the following, or the indication information is configured to indicate one of the following, or the terminal capability information is configured to indicate at least one of the following:
determining the first slot based on subcarrier spacings of uplink carriers on all configured frequency bands;
determining the first slot based on subcarrier spacings corresponding to at least one first frequency band group, wherein the first frequency band group comprises at least two frequency bands, and the subcarrier spacings corresponding to the first frequency band group are determined based on subcarrier spacings of uplink carriers on each frequency band in the first frequency band group; or
determining the first slot based on subcarrier spacings of uplink carriers on a pre-switching frequency band and subcarrier spacings of uplink carriers on a post-switching frequency band.

5. The carrier switching method according to claim 4, wherein determining the first slot based on subcarrier spacings of uplink carriers on all configured frequency bands comprises:
determining a maximum subcarrier spacing among subcarrier spacings of uplink carriers on all configured frequency bands;
determining a slot corresponding to the maximum subcarrier spacing as the first slot.

6. The carrier switching method according to claim 4, wherein determining the first slot based on subcarrier spacings of uplink carriers on all configured frequency bands comprises:
determining multiple second frequency band groups based on all configured frequency bands; wherein each second frequency band group comprises at least two frequency bands;
determining a subcarrier spacing corresponding to each second frequency band group based on subcarrier spacings of uplink carriers on frequency bands in the second frequency band group;
determining a minimum subcarrier spacing among subcarrier spacings corresponding to all second frequency band groups;
determining a slot corresponding to the minimum subcarrier spacing as the first slot.

7. The carrier switching method according to claim 4, wherein determining the first slot based on subcarrier spacings corresponding to at least one first frequency band group comprises:
determining a minimum subcarrier spacing among subcarrier spacings corresponding to the at least one first frequency band group;
determining a slot corresponding to the minimum subcarrier spacing as the first slot.

8. The carrier switching method according to claim 4, 6, or 7, wherein a subcarrier spacing corresponding to a target frequency band group is a maximum subcarrier spacing among subcarrier spacings of uplink carriers on all frequency bands in the target frequency band group;
wherein the target frequency band group is a first frequency band group or tahe second frequency band group.

9. The carrier switching method according to claim 4, wherein determining the first slot based on subcarrier spacings of uplink carriers on the pre-switching frequency band and subcarrier spacings of uplink carriers on the post-switching frequency band comprises:
determining a maximum subcarrier spacing between subcarrier spacings of uplink carriers on the pre-switching frequency band and subcarrier spacings of uplink carriers on the post-switching frequency band;
determining a slot corresponding to the maximum subcarrier spacing as the first slot.

10. The carrier switching method according to claim 9, wherein:
a start time of a first slot corresponding to a (K+1)-th carrier switch is before an end time of a first slot corresponding to a K-th carrier switch;
and/or,
a start time of a first slot corresponding to a (K+1)-th carrier switch is after an end time of a first slot corresponding to a K-th carrier switch;
wherein K is a positive integer.

11. The carrier switching method according to claim 1, wherein a value of N is predefined by a protocol or configured by a network side, and N is 1.

12. A carrier switching method, comprising:
in a case where a number of frequency bands for uplink switching configured is greater than 2, determining, by a network device, a first slot for carrier switching based on subcarrier spacings of uplink carriers on multiple frequency bands;
instructing, by the network device, a terminal to perform a maximum of N carrier switches within the first slot, where N is a positive integer.

13. The carrier switching method according to claim 12, wherein before instructing the terminal to perform the maximum of N carrier switches within the first slot, the method further comprises:
sending, by the network device, indication information to the terminal; wherein the indication information is configured to indicate determining the first slot based on subcarrier spacings of uplink carriers on multiple frequency bands.

14. The carrier switching method according to claim 13, wherein before sending the indication information to the terminal, the method further comprises:
receiving, by the network device, terminal capability information sent by the terminal; wherein the terminal capability information indicates a capability of the terminal to determine the first slot;
sending the indication information to the terminal comprises:
sending, by the network device, the indication information to the terminal based on the terminal capability information.

15. A carrier switching apparatus, comprising a memory, a transceiver, and a processor;
wherein the memory is configured to store a computer program; the transceiver is configured to transmit and receive data under the control of the processor; the processor is configured to read the computer program from the memory to perform:
in a case where a number of frequency bands for uplink switching configured is greater than 2, determining a first slot for carrier switching based on subcarrier spacings of uplink carriers on multiple frequency bands;
performing a maximum of N carrier switches within the first slot, where N is a positive integer.

16. The carrier switching apparatus according to claim 15, wherein the processor is further configured to read the computer program from the memory to perform:
receiving indication information sent by a network device; wherein the indication information is configured to indicate determining the first slot based on subcarrier spacings of uplink carriers on multiple frequency bands.

17. The carrier switching apparatus according to claim 16, wherein the processor is further configured to read the computer program from the memory to perform:
sending terminal capability information to the network device; wherein the terminal capability information indicates a capability to determine the first slot, and the indication information is determined based on the terminal capability information.

18. The carrier switching apparatus according to any one of claims 15 to 17, wherein the processor is further configured to read the computer program from the memory and perform at least one of the following operations, or the indication information is configured to indicate one of the following, or the terminal capability information is configured to indicate at least one of the following:
determining the first slot based on subcarrier spacings of uplink carriers on all configured frequency bands;
determining the first slot based on subcarrier spacings corresponding to at least one first frequency band group, wherein the first frequency band group comprises at least two frequency bands, and the subcarrier spacings corresponding to the first frequency band group are determined based on subcarrier spacings of uplink carriers on each frequency band in the first frequency band group; or
determining the first slot based on subcarrier spacings of uplink carriers on a pre-switching frequency band and subcarrier spacings of uplink carriers on a post-switching frequency band.

19. The carrier switching apparatus according to claim 18, wherein the processor is further configured to read the computer program from the memory to perform:
determining a maximum subcarrier spacing among subcarrier spacings of uplink carriers on all configured frequency bands;
determining a slot corresponding to the maximum subcarrier spacing as the first slot.

20. The carrier switching apparatus according to claim 18, wherein the processor is further configured to read the computer program from the memory to perform:
determining multiple second frequency band groups based on all configured frequency bands; wherein each second frequency band group comprises at least two frequency bands;
determining a subcarrier spacing corresponding to each second frequency band group based on subcarrier spacings of uplink carriers on frequency bands in the second frequency band group;
determining a minimum subcarrier spacing among subcarrier spacings corresponding to all second frequency band groups;
determining a slot corresponding to the minimum subcarrier spacing as the first slot.

21. The carrier switching apparatus according to claim 18, wherein the processor is further configured to read the computer program from the memory to perform:
determining a minimum subcarrier spacing among subcarrier spacings corresponding to the at least one first frequency band group;
determining a slot corresponding to the minimum subcarrier spacing as the first slot.

22. The carrier switching apparatus according to claim 18, 20, or 21, wherein a subcarrier spacing corresponding to a target frequency band group is a maximum subcarrier spacing among subcarrier spacings of uplink carriers on all frequency bands in the target frequency band group;
wherein the target frequency band group is a first frequency band group or a second frequency band group.

23. The carrier switching apparatus according to claim 18, wherein the processor is further configured to read the computer program from the memory to perform:
determining a maximum subcarrier spacing between subcarrier spacings of uplink carriers on the pre-switching frequency band and subcarrier spacings of uplink carriers on the post-switching frequency band;
determining a slot corresponding to the maximum subcarrier spacing as the first slot.

24. The carrier switching apparatus according to claim 23, wherein:
a start time of a first slot corresponding to a (K+1)-th carrier switch is before an end time of a first slot corresponding to a K-th carrier switch;
and/or,
a start time of a first slot corresponding to a (K+1)-th carrier switch is after an end time of a first slot corresponding to a K-th carrier switch;
wherein K is a positive integer.

25. The carrier switching apparatus according to claim 15, wherein the value of N is predefined by a protocol or configured by a network side, and N is 1.

26. A terminal, comprising:
a determination unit, configured to determine a first slot for carrier switching based on subcarrier spacings of uplink carriers on multiple frequency bands in a case where a number of frequency bands for uplink switching configured is greater than 2;
a processing unit, configured to perform a maximum of N carrier switches within the first slot, where N is a positive integer.

27. The terminal according to claim 26, further comprising:
a receiving unit, configured to receive indication information sent by a network device; wherein the indication information is configured to indicate determining the first slot based on subcarrier spacings of uplink carriers on multiple frequency bands.

28. The terminal according to claim 27, further comprising:
a sending unit, configured to send terminal capability information to the network device; wherein the terminal capability information indicates a capability of the terminal to determine the first slot, and the indication information is determined based on the terminal capability information.

29. The terminal according to any one of claims 26 to 28, wherein the determination unit is further configured to perform at least one of the following, or the indication information is configured to indicate one of the following, or the terminal capability information is configured to indicate at least one of the following:
determine the first slot based on subcarrier spacings of uplink carriers on all configured frequency bands;
determine the first slot based on subcarrier spacings corresponding to at least one first frequency band group, wherein the first frequency band group comprises at least two frequency bands, and the subcarrier spacings corresponding to the first frequency band group are determined based on subcarrier spacings of uplink carriers on each frequency band in the first frequency band group; or
determine the first slot based on subcarrier spacings of uplink carriers on a pre-switching frequency band and subcarrier spacings of uplink carriers on a post-switching frequency band.

30. The terminal according to claim 29, wherein the determination unit is further configured to:
determine a maximum subcarrier spacing among subcarrier spacings of uplink carriers on all configured frequency bands;
determine a slot corresponding to the maximum subcarrier spacing as the first slot.

31. The terminal according to claim 29, wherein the determination unit is further configured to:
determine multiple second frequency band groups based on all configured frequency bands; wherein each second frequency band group comprises at least two frequency bands;
determine a subcarrier spacing corresponding to each second frequency band group based on subcarrier spacings of uplink carriers on frequency bands in the second frequency band group;
determine a minimum subcarrier spacing among subcarrier spacings corresponding to all second frequency band groups;
determine a slot corresponding to the minimum subcarrier spacing as the first slot.

32. The terminal according to claim 29, wherein the determination unit is further configured to:
determine a minimum subcarrier spacing among subcarrier spacings corresponding to the at least one first frequency band group;
determine a slot corresponding to the minimum subcarrier spacing as the first slot.

33. The terminal according to claim 29, 31, or 32, wherein a subcarrier spacing corresponding to a target frequency band group is a maximum subcarrier spacing among subcarrier spacings of uplink carriers on all frequency bands in the target frequency band group;
wherein the target frequency band group is a first frequency band group or a second frequency band group.

34. The terminal according to claim 29, wherein the determination unit is further configured to:
determine a maximum subcarrier spacing between subcarrier spacings of uplink carriers on the pre-switching frequency band and subcarrier spacings of uplink carriers on the post-switching frequency band;
determine a slot corresponding to the maximum subcarrier spacing as the first slot.

35. The terminal according to claim 34, wherein:
a start time of a first slot corresponding to a (K+1)-th carrier switch is before an end time of a first slot corresponding to a K-th carrier switch;
and/or,
a start time of a first slot corresponding to a (K+1)-th carrier switch is after an end time of a first slot corresponding to a K-th carrier switch;
wherein K is a positive integer.

36. The terminal according to claim 26, wherein a value of N is predefined by a protocol or configured by a network side, and N is 1.

37. A carrier switching apparatus, comprising a memory, a transceiver, and a processor;
wherein the memory is configured to store a computer program; the transceiver is configured to transmit and receive data under the control of the processor; the processor is configured to read the computer program from the memory to perform:
in a case where a number of frequency bands for uplink switching configured is greater than 2, determining a first slot for carrier switching based on subcarrier spacings of uplink carriers on multiple frequency bands;
instructing a terminal to perform a maximum of N carrier switches within the first slot, where N is a positive integer.

38. A network device, comprising:
a determination unit, configured to determine a first slot for carrier switching based on subcarrier spacings of uplink carriers on multiple frequency bands in a case where a number of frequency bands for uplink switching configured is greater than 2;
a processing unit, configured to instruct a terminal to perform a maximum of N carrier switches within the first slot, where N is a positive integer.

39. A processor-readable storage medium, wherein the processor-readable storage medium stores a computer program, the computer program is configured to cause a processor to perform the steps of the carrier switching method according to any one of claims 1 to 11, or the computer program is configured to cause a processor to perform the steps of the carrier switching method according to any one of claims 12 to 14.
